# EUROPÄISCHE PATENTSCHRIFT

(11) **EP 2 282 696 B1**
(45) Veröffentlichungstag und Bekanntmachung des Hinweises auf die Patenterteilung: **04.01.2017**
(21) Anmeldenummer: 09757547.6
(22) Anmeldetag: 03.06.2009
(51) Int. Cl.: A61C 8/00, A61F 2/00, A61C 19/02, B65D 25/08, B65D 25/54, B65D 81/22, B65D 41/62, B65D 43/16, B65D 51/18

(54) **VERPACKUNG FÜR DENTALIMPLANTAT**
PACKAGE FOR DENTAL IMPLANT
EMBALLAGE POUR IMPLANT DENTAIRE

(30) Priorität: 06.06.2008 CH 861082008
(43) Veröffentlichungstag der Anmeldung: 16.02.2011
(73) Patentinhaber: THOMMEN MEDICAL AG, 2540 Grenchen (CH)
(72) Erfinder: SCHLOTTIG, Falko, CH-4414 Füllinsdorf (CH); WERNER, Uwe, CH-8825 Hütten (CH); IRÁNYI, Daniel, CH-6312 Steinhausen (CH); GÜNTHART, Matthias, CH-5000 Aarau (CH); SPINELLI, Nico, CH-8057 Zürich (CH)
(74) Vertreter: Bremi, Tobias Hans
(86) Internationale Anmeldenummer: PCT/EP2009/056790
(87) Internationale Veröffentlichungsnummer: WO 2009/147166

(56) Entgegenhaltungen:
- EP-A- 1 523 955
- WO-A-2005/037126
- WO-A-2006/031162
- WO-A-2008/047976

## Beschreibung

### TECHNISCHES GEBIET

Die vorliegende Erfindung betrifft eine Verpackung für ein Implantat, insbesondere ein Dentalimplantat, sowie ein Verfahren zur Vorbereitung eines Implantates, insbesondere eines Dentalimplantates, zur Einsetzung in den menschlichen Körper respektive in menschliches Gewebe.

### STAND DER TECHNIK

Insbesondere aus dem Bereich der Dentalimplantate, das heisst der Implantate, welche bspw. aus Keramik oder einem speziellen metallischen Werkstoff in Form eines Stiftes mit einem Aussengewinde ausgestaltet sind, ist es bekannt, spezielle sterile Verpackungen zu gestalten, welche einerseits einen problemlosen Transport der Dentalimplantate erlauben und welche andererseits eine möglichst einfache und zuverlässige Handhabung bei der entsprechenden Operation erlauben. Des Weiteren sollen es solche Verpackungen normalerweise von aussen, ohne dass sie bereits geöffnet sind, erlauben, festzustellen, welcher Typ resp. welche Grösse des Implantats im Behälter vorliegt.

So beschreibt bspw. die US 5,368,160 einen spezifischen zylinderförmigen Behälter für ein solches Implantat, bei welchem die Einheilkappe im Deckel des eigentlichen Behälters angeordnet ist.

Die EP 1 749 501 beschreibt ebenfalls eine i.w. rotationssymmetrische Verpackung für ein Dentalimplantat, die Anmeldung betrifft aber in der Hauptsache ein Halteelement für ein solches Implantat, das heisst ein Element, an welchem das Implantat befestigt ist und welches es erlaubt, das Implantat möglichst einfach mit einem Werkzeug zu verbinden für das anschliessende Einsetzen des Implantates in den menschlichen Körper.

Ebenfalls eine Verpackung für ein Dentalimplantat beschreibt die WO 99/65416, auch hier ist die Verpackung i.w. zylinderförmig ausgestaltet und es gibt einen schwenkbaren Deckel, welcher, wenn geöffnet, auf seiner Innenseite die Einheilkappe freigibt und auf der anderen Seite die Montageanordnung am Dentalimplantat freilegt.

Solche Dentalimplantate werden nämlich nicht nur allein als die eigentlichen Implantate den Zahnärzten zur Verfügung gestellt, sondern werden stets gleich als Einheit mit einer Montageanordnung, welche in eine innere Ausnehmung oder äussere Verbindungsmöglichkeit des Implantates eingelassen ist, ausgeliefert. So kann das Implantat direkt an dieser Montageanordnung mit dem entsprechenden Werkzeug (bspw. Drehmomentschlüssel o.ä.) verbunden werden, ohne dass das Implantat je von Hand oder mit einem Werkzeug ergriffen werden muss.

Ebenfalls eine Verpackung für ein Dentalimplantat von diesem Typ beschreibt die US 2007/0181446, auch hier ist die Verpackung im Wesentlichen zylindrisch und ist spezifisch dafür ausgelegt, unterschiedliche Grössen von Dentalimplantaten in günstiger Weise und problemlos aufzunehmen.

Eine weitere mehrteilig ausgestaltete Verpackung für ein solches Implantat ist in der WO 2008/047976 beschrieben.

Es ist zudem bekannt, dass eine Benetzung eines Dentalimplantates bevorzugtermassen kurz vor dessen Einsetzen in den menschlichen Körper von Vorteil sein kann. Entsprechend wird konventionellerweise so vorgegangen, dass das Implantat aus einem Behälter, wie er bspw. in den oben angegebenen Schriften dargestellt ist, bei einer entsprechenden Halterung an der Montagehalterung aus der Verpackung entnommen wird und dann in ein Tauchbad in einem separaten Behälter eingetaucht wird. Dies erfordert eine Vielzahl von fehleranfälligen Manipulationen, welche unerwünscht sind.

Die EP 1523955 beschreibt eine Verpackung für ein Dentalimplantat mit einer Baugruppe zum Befestigen des Implantats innerhalb der Verpackung. Die Baugruppe umfasst dabei eine Klemmbuchse mit einem offenen Ende zum Aufnehmen des Dentalimplantats und einem distalen Ende, ein Element, das eine komplementäre Passfläche aufweist, sowie ein Abstandsstück, das so gestaltet ist, dass es das Dentalimplantat innerhalb der Klemmbuchse positioniert.

### DARSTELLUNG DER ERFINDUNG

Der Erfindung liegt demnach die Aufgabe zugrunde, eine verbesserte Verpackung für Implantate zur Verfügung zu stellen.

Die Lösung dieser Aufgabe wird dadurch erreicht, dass eine Verpackung für ein Implantat, insbesondere für ein Dentalimplantat, vorgeschlagen wird, mit einem Gehäuse, welches einen durch einen schwenkbaren und/oder schiebbaren Deckel im wesentlichen flüssigkeitsdicht abschliessbaren Aufnahmeraum für einen ersten Abschnitt des Implantats (das eigentliche Implantat) aufweist. Unter dem Begriff "flüssigkeitsdicht" ist im Zusammenhang mit diesem Aufnahmeraum eine für die bestimmungsgemäße Verwendung geeignete Flüssigkeitsdichtigkeit zu verstehen. Insbesondere bedeutet dies, dass der Aufnahmeraum genügend flüssigkeitsdicht ist, damit er in jenem Moment, wo die Flüssigkeit aus der Flüssigkeitspatrone ausgelöst wird, und die Flüssigkeit in den Aufnahmeraum einströmt, beispielsweise ein schütteln der gesamten Verpackung ermöglicht, im wesentlichen ohne dass Flüssigkeit austritt. Typischerweise genügt eine Flüssigkeitsdichtigkeit, so dass bei einem normalen Schütteln zur Benetzung des Implantats nicht mehr als ein paar kleine Tropfen austreten können. Eine wirklich vollständige Flüssigkeitsdichtigkeit ist aber bevorzugtermassen nicht erforderlich, da ja eben die Flüssigkeit in der Flüssigkeitspatrone gelagert wird und nur für die Benetzung kurz vor der Implantation in diesem Aufnahmeraum gehalten werden muss. Als Implantat ist in diesem Zusammenhang insbesondere die Einheit aus dem eigentlichen Implantat und einer Montagehalterung, wie sie typischerweise am oder im Implantat für die Montage desselben vorgesehen ist, zu verstehen. Im eigentlichen Aufnahmeraum ist nur das eigentliche Implantat, das heisst der später im menschlichen Körper respektive im menschlichen Knochen/Gewebe eingesetzte Teil angeordnet (so wie der darin befestigte Teil der Montagehalterung). Die Verpackung verfügt zudem über einen durch eine Gehäusewand vom Aufnahmeraum abgetrennten Bereich für einen zweiten Abschnitt (eben typischerweise der genannte Montageabschnitt, respektive dessen Bereich, an dem ein Werkzeug angreifen kann) des Implantats, wobei in der Gehäusewand eine den Aufnahmeraum und diesen Bereich verbindende Durchgangsöffnung für einen Übergangsabschnitt zwischen dem ersten Abschnitt und dem zweiten Abschnitt des Implantats vorhanden ist. Mit anderen Worten ragt der zweite Abschnitt, das heisst der vordere Teil der Montageanordnung im spezifischen oben genannten Fall, heraus und ist nicht im Aufnahmeraum angeordnet. Damit das Implantat ohne Trennung von eigentlichem Implantat und Montagehalterung bei bevorzugtermassen an der Montagehalterung befestigtem Werkzeug aus der Verpackung entnommen werden kann, verfügt die Verpackung respektive spezifisch die Gehäusewand über einen Entnahmeschlitz, welcher es erlaubt, das Implantat bei geöffnetem Deckel ohne Trennung der Abschnitte zu entnehmen. Typischerweise ist dieser Entnahmeschlitz nach oben offen ausgebildet. Des weiteren verfügt die Verpackung erfindungsgemäss über wenigstens eine Flüssigkeitspatrone sowie ein zugehöriges Auslöseelement, wobei in dieser Flüssigkeitspatrone normalerweise eine Flüssigkeit angeordnet ist, mit welcher das Implantat zur Vorbereitung vor seinem Einsetzen in den menschlichen Körper an der Oberfläche oder auch in das Implantat hinein (beispielsweise bei einer porösen oder schwammartigen Oberfläche) benetzt, gespült, konditioniert, chemisch oder biochemisch oder pharmazeutisch modifiziert oder beschichtet werden kann. Normalerweise kann dabei also die Flüssigkeitspatrone bei geschlossenem Deckel über das Auslöseelement derart geöffnet werden, dass in der Flüssigkeitspatrone befindliche Flüssigkeit bei normalerweise geschlossenem Deckel in den Aufnahmeraum ausfliessen kann. Die Flüssigkeitspatrone muss dabei nicht zwingend bereits in der Verpackung angeordnet sein, sondern es ist auch möglich, eine solche Verpackung nur mit einer Aufnahme für eine Flüssigkeitspatrone auszustatten, und die Flüssigkeitspatrone, welche beispielsweise separat und steril hergestellt werden kann, und welche beispielsweise zudem an die Bedürfnisse angepasste unterschiedliche Flüssigkeiten enthalten kann, in ein solches Gehäuse einzusetzen oder aufzusetzen. So können beispielsweise Verpackungen mit Implantaten von unterschiedlicher Grösse und Flüssigkeitspatronen mit Flüssigkeiten für unterschiedliche Oberflächenbehandlungen separat vorgesehen werden (kit of part), um die Flexibilität sowohl bei der Herstellung wie auch bei der Verwendung in der Praxis zu erhöhen. Auch solche Kombinationspackungen oder kit of part Arrangements sind von der vorliegenden Erfindung umfasst.

Einer der Kernpunkte der vorliegenden Erfindung ist es also, eine Verpackung für ein Implantat vorzusehen, welche direkt mit einem Behälter mit Flüssigkeit versehen ist, und dieser Behälter respektive die darin vorhandene Flüssigkeit getrennt vom Implantat angeordnet ist und entsprechend die Flüssigkeit zunächst nicht mit dem Implantat in Kontakt kommt. Es geht also um eine Verpackung, bei welcher eine Flüssigkeit erst in Vorbereitung der Entnahme in Kontakt mit dem Implantat gebracht werden soll.

Es ist aber auch möglich, dass im Aufnahmeraum bereits eine Flüssigkeit vorliegt und die Flüssigkeit in der Flüssigkeitspatrone dieser bereits im Aufnahmeraum vorliegenden Flüssigkeit kurz vor der Entnahme des Implantates beigemischt werden kann. Dies ist beispielsweise dann von Vorteil, wenn die kombinierten Flüssigkeiten nicht stabil sind (beispielsweise Ausflocken oder ähnliches), oder wenn die Lagerung des Implantates generell in einer ersten Flüssigkeit erfolgen soll und erst kurz vor der Entnahme eine zweite Flüssigkeit respektive eine zweite Komponente mit dem Implantat in Kontakt gebracht werden soll. Ein weiterer Kernpunkt ist es des weiteren, eine solche Verpackung gezielt so auszugestalten, dass das Implantat respektive das zu entnehmende Teil nicht vollständig in der Verpackung angeordnet ist sondern wenigstens teilweise aus dem Bereich, in welchem die Benetzung durch die Flüssigkeit stattfinden soll, in den offenen Raum herausragt. Insbesondere dann, wenn das zu entnehmende Teil beispielsweise einen Montagebereich, Montageaufsatz oder eine Montagehalterung aufweist, welche ohnehin nur für die Halterung an einem Werkzeug vorgesehen sind oder für die anschliessende Befestigung eines weiteren Teiles (beispielsweise Krone), ist es ja nicht erforderlich, dass dieser Teil benetzt wird, es ist häufig eher von Nachteil, weil dieser Bereich durch die Benetzung beispielsweise durch das Werkzeug weniger gut ergriffen werden kann. Das Freiliegen dieses zweiten Teils respektive zweiten Abschnittes erlaubt es beispielsweise auch, die Verpackung sogar vor der Öffnung der Flüssigkeitspatrone bereits über die Montagehalterung an einem Werkzeug zu befestigen, und beispielsweise das Schütteln oder Vibrieren der gesamten Verpackung zur Benetzung des Implantates nach dem Öffnen der Flüssigkeitspatrone durch das Werkzeug zu bewirken. Sowohl der Deckel als auch das Gehäuse sind dabei normalerweise starr aus Kunststoff.

Gemäss einer ersten bevorzugten Ausführungsform ist das Gehäuse länglich mit einem vorderen Ende und einem hinteren Ende ausgebildet, und der Bereich (für die Montagehalterung oder ähnliches) ist am vorderen Ende angeordnet, die Flüssigkeitspatrone ist am gegenüberliegenden hinteren Ende oder auch auf der länglichen Verpackung (bevorzugt beim hinteren Ende) angeordnet, und der Aufnahmeraum ist dazwischen oder darunter angeordnet.

Normalerweise ist der Bereich bei geschlossenem Deckel frei zugänglich, und insbesondere bevorzugt für eine Montagehalterung für das Implantat vorgesehen, und vorzugsweise ist dieser Bereich derart freiliegend, dass die Montagehalterung mit dem bestimmungsgemässen Werkzeug ohne weiteres ergriffen und daran befestigt werden kann.

Gemäss einer weiteren bevorzugten Ausführungsform ist die Verpackung dadurch gekennzeichnet, dass sie zur zusätzlichen Aufnahme einer Einheilkappe vorgesehen ist. Bevorzugtermassen weist in diesem Zusammenhang der Deckel eine Öffnung zur Entnahme der Einheilkappe auf und das Gehäuse eine Gehäuseöffnung zur Entnahme der Einheilkappe. Es muss dann für die Einheilkappe kein separater Deckel vorgesehen werden, wenn beispielsweise, vorzugsweise bei im Gehäuse (und nicht in Deckel) angeordneter Einheilkappe, die Gehäuseöffnung durch den Deckel sowohl bei vollständig geschlossenem als auch bei vollständig geöffnetem Deckel abgedeckt wird und nur bei einer Zwischenposition oder einer über die Öffnung hinausgehenden Position des Deckels durch in Deckung bringen der Öffnung mit der Gehäuseöffnung freigelegt wird. Oder wenn, vorzugsweise bei im oder am Deckel angeordneter Einheilkappe, die Öffnung durch das Gehäuse sowohl bei vollständig geschlossenem als auch bei vollständig geöffnetem Deckel abgedeckt wird und nur bei einer Zwischenposition des Deckels durch in Deckung bringen der Öffnung mit der Gehäuseöffnung freigelegt wird.

Eine weitere bevorzugte Ausführungsform ist dadurch gekennzeichnet, dass der Aufnahmeraum im unteren Bereich einen Auffangbehälter für die Flüssigkeit der Flüssigkeitspatrone aufweist, welcher bevorzugtermassen ein Volumen aufweist, welches im wesentlichen dem Flüssigkeitsvolumen der Flüssigkeitspatrone entspricht oder geringer ist. Insbesondere hinsichtlich einer Zwischenlagerung für den Zeitraum, in welchem das Implantat eingesetzt wird und die Einheilkappe noch nicht verwendet werden soll, ist es von Vorteil, wenn dieser Aufnahmeraum bei vollständig geöffneter Verpackung durch den Deckel verschlossen oder wenigstens abgedeckt wird. Dies beispielsweise indem sich der Deckel beim Öffnen über den Auffangbehälter schiebt. Der Auffangbehälter kann dabei im wesentlichen nur unterhalb des Aufnahmeraumes für das Implantat angeordnet sein, er kann aber auch länglich ausgebildet sein und sich beispielsweise bis zum hinteren Ende der Verpackung, dort wo die Flüssigkeitspatrone angeordnet ist, erstrecken. Er kann dabei in diesem hinteren Bereich der Verpackung als Standfläche für die Verpackung dienen. Der Auffangbehälter kann dabei einen nach hinten hin schräg nach unten geneigten Boden aufweisen, so dass darin aufgefangene Flüssigkeit zum Bereich am hinteren Ende der Verpackung fließt, wo der Auffangbehälter durch weitere Wandungen der Verpackung von oben abgedeckt ist.

Eine erste besonders bevorzugte Ausführungsform der Verpackung zeichnet sich durch eine im wesentlichen zylindrische Aussenform aus. Spezifisch ist sie bevorzugtermassen dadurch gekennzeichnet, dass das Gehäuse einen hohlzylindersegmentförmigen Bereich aufweist, welcher zusammen mit einem ebenfalls hohlzylindersegmentförmigen und koaxial zum hohlzylindersegmentförmigen Bereich angeordneten Deckel im wesentlichen den Aufnahmeraum (in einem axialen Bereich der Verpackung) begrenzt. Der Deckel kann dabei einen Innendurchmesser aufweisen, welcher im wesentlichen dem Aussendurchmesser des entsprechenden Gehäuseabschnitts entspricht (Deckel läuft über dem Gehäuse) oder er kann über einen Aussendurchmesser verfügen, welcher im wesentlichen dem Innendurchmesser des entsprechenden Gehäuseabschnitts entspricht (Deckel läuft gewissermassen im Gehäuse). Zusammen bilden der Deckel und der Gehäuseabschnitt einen gewissermassen zylindrischen Bereich der Verpackung, entsprechend überstreicht der Deckel wenigstens den zum vollen Umlauf fehlenden Umfang des Gehäuseabschnitts oder ist bevorzugtermassen über einen grösseren Umfangsbereich ausgebildet, so dass der Deckel in geschlossenem Zustand den Gehäusebereich entweder von aussen oder von innen überlappt. Bevorzugtermassen ist dabei der Bereich (in welchem beispielsweise die Montagehalterung des Implantates liegt) durch eine senkrecht zur Achse angeordnete, bevorzugt kreisscheibenförmige oder kreissegmentförmige Gehäusewand (beispielsweise auch als liegendes Kreissegment ausgebildet) vom Aufnahmeraum abgetrennt. Diese Gehäusewand verfügt vorzugsweise über eine im wesentlichen auf der Achse angeordnete Durchgangsöffnung (durch welche der Übergangsabschnitt des Implantats, wenn es in der Verpackung angeordnet ist, durchgreift), welche durch einen Schlitz, welcher bevorzugtermassen verglichen mit der Durchgangsöffnung verjüngt ist, nach oben offen ist. Der Deckel ist dabei bevorzugtermassen um die gemeinsame Achse im Gehäuse drehbar gelagert, wobei er, wie oben bereits erläutert, beispielsweise mit seiner Aussenfläche im wesentlichen bündig auf der Innenseite des Gehäuses gleitet (um die genannte Flüssigkeitsdichtigkeit zu gewährleisten können gegebenenfalls dazwischen noch Dichtungen angeordnet sein, welche am Gehäuse und/oder am Deckel befestigt sein können). Der Deckel kann so von einem geschlossenen Zustand der Verpackung (flüssigkeitsdicht im Sinne der obigen Definition, typischerweise eigentliches Implantat im wesentlichen steril gelagert) in einen offenen Zustand (Implantat kann entnommen werden) umgeschwenkt werden. Um sicherzustellen, dass auch zur Gehäusewand eine Abdichtung gewährleistet ist, kann der Deckel an seinem der Gehäusewand zugewandten axialen Rand über einen vorzugsweise den gleichen Winkelbereich wie das Zylindersegment des Deckels überstreichenden, senkrecht zur Achse angeordneten Dichtungswandabschnitt verfügen.

Um eine erhöhte Dichtigkeit des Gehäuseinnenraumes für den Vorgang des Schüttelns sicherzustellen, ist es möglich, auf der Innenseite der Gehäusewand und/oder auch in den Randbereichen des Deckels auf dessen Außenseite, dort wo dieser im geschlossenen Zustand an das Gehäuse angrenzt, Dichtungsmittel vorzusehen. Alternativ oder zusätzlich ist es auch möglich, diese Dichtungsmittel nicht am Deckel sondern an diesen Stellen am Gehäuse anzubringen.

Bei der Gehäusewand ist es beispielsweise möglich, ein solches Dichtungsmittel auf der Innenseite, bei einer kreisscheibenförmigen Gehäusewand wie beispielsweise beim ersten und dritten anfolgend dargestellten Ausführungsform, in Form einer Kreisscheibe aus einer flexiblen Dichtfolie beispielsweise in Form einer Polyethylenfolie (zum Beispiel LDPE) mit einer Dicke im Bereich von 0.05-0.5mm, zu befestigen. Weitere mögliche Materialien sind Polypropylen, Polycarbonat, COC, Polyamid oder auch Verbundfolien aus diesen Materialien beispielsweise Verbundfolien aus Polyethylen und Polyamid etc.. Die Dichtfolie kann aus dem gleichen Material bestehen wie das Gehäuse an der Stelle der Befestigung, sie kann aber auch aus einem anderen Material bestehen. Bei dieser Dichtfolie auf der Innenseite der Gehäusewand kann der nach oben offene Schlitz zur Entnahme des Implantats dabei als einfacher Schnitt in der Folie ausgebildet sein, so dass sich dort gewissermassen eine Lippendichtung ausbildet, die aber trotzdem ein Einlegen und eine Entnahme des Implantats ermöglicht. Ansonsten deckt diese Dichtfolie die Gehäusewand auf der Innenseite gewissermassen die ganze Fläche der Gehäusewand vollständig überdeckend ab. Gibt es beispielsweise in der Gehäusewand zur Erleichterung der Entnahme des Implantats einen weiteren Schlitz, der zur Entnahme gespreizt wird, so wird dieser Schlitz durch die Dichtfolie völlig überdeckt, was unproblematisch ist, da die Dichtfolie eine genügende Flexibilität besitzt, um die Spreizung zur Entnahme trotzdem zu ermöglichen.

Die am Deckel respektive am Gehäuse im Angrenzungsbereich im geschlossenen Zustand angebrachte Dichtfolie kann als Streifen ausgebildet sein, beispielsweise mit einer Breite im Bereich von 0.1-3 mm.

Die Dichtfolien, sowohl am Deckel und/oder am Gehäuse respektive an der Gehäusewand können mit unterschiedlichen Methoden befestigt werden, beispielsweise unter Verwendung von Adhäsiven, Krimpen, Ultraschallschweißen, etc.

Im Zusammenhang mit einer solchen Verpackung ist es möglich, dass der hohlzylindersegmentförmige Bereich des länglichen Gehäuses zu einem vorderen Ende über die Gehäusewand wenigstens so weit wie der zweite Abschnitt des Implantats, vorzugsweise etwas weiter als dieser, in axialer Richtung hervor steht und dadurch der bevorzugt in axialer Richtung und nach oben offene Bereich gebildet wird. So ist gewissermassen ein zwar offener aber nach unten wannenförmig abgeschlossener Bereich für die Montagehalterung vorgesehen. Am gegenüberliegenden hinteren Ende kann das Gehäuse über einen, an den Aufnahmeraum anschliessenden und diesen ebenfalls noch teilweise bildenden, im wesentlichen geschlossenen hohlzylinderförmigen Bereich verfügen, in welchem (bevorzugt ganz am hinteren Ende) eine bevorzugt im wesentlichen zylindrisch ausgebildete und koaxial angeordnete und in diesen Bereich bevorzugt passgenau in axialer Richtung einschiebbare und/oder darin drehbare Flüssigkeitspatrone angeordnet ist. Eine besonders intuitive Handhabung ist möglich, wenn, wie weiterhin bevorzugt, das Auslöseelement die Freigabe der Flüssigkeit auslöst, wenn die Flüssigkeitspatrone in axialer Richtung (das heisst zum Aufnahmeraum hin) in das Gehäuse z.B. bis zu einem Anschlag eingeschoben wird und/oder verdreht wird.

Generell kann es sich bei diesem Auslöseelement, welches entweder Bestandteil der Flüssigkeitspatrone oder des Gehäuses oder des Deckels sein kann, um einen Dorn, eine Schneidkante oder einen Vorsprung handeln, welcher z.B. eine Membran oder andere Sollbruchstelle der Flüssigkeitspatrone aufreisst, ansticht oder freigibt. Andere Mechanismen sind aber ebenfalls möglich. Die Membran kann durch das Auslöseelement auch perforiert werden, und/oder es kann mit Nadeln eingestochen werden. Das Auslöseelement kann dabei gemäß einer bevorzugten Ausführungsform als bezüglich der Ebene der Membran geneigte Schneidkante ausgebildet sein, so dass, wenn das Auslöseelementes im wesentlichen senkrecht zur Ebene der Membran in die Membran hinein verschoben wird, sich das Auslöseelement sukzessive in die Membran hinein schneidet. Ganz besonders bevorzugt handelt es sich bei der Schneidkante um eine wenigstens teilweise umlaufende (auf einem Kreisabschnitt geführte, zum Beispiel Halbkreis oder Dreiviertelkreis) geneigte Schneidkante. Insbesondere bevorzugtermassen kann das Auslöseelement zusätzlich ein Membran-Öffnungselement umfassen, welches die Membran nach deren Auftrennen durch die Schneidkante zur Seite schiebt respektive zur Seite klappt. So wird zusammen mit oder nach dem schneiden durch die Schneidkante oder den Dorn die Membran auch tatsächlich aus der durch die Membran geschlossenen Öffnung entfernt und so die Flüssigkeit effektiv freigegeben. In Folge der häufig geringen Ausmaße der Öffnung des Flüssigkeitsbehälters und der unter Umständen hohen Oberflächenspannung der darin gehaltenen Flüssigkeit kann eine solche gezielte Entfernung der Membran enorm wichtig sein.

Der hohlzylindersegmentförmige Bereich des Gehäuses kann bei einer derartigen gewissermassen zylindrischen Verpackung um die Achse einen Winkelbereich von 120-210° umfassen, vorzugsweise im Bereich von 160-200°. Der hohlzylindersegmentförmige Abschnitt des Deckels kann seinerseits einen Winkelbereich von 120-270°, vorzugsweise von 200-250° umfassen. Eine besonders praktische und elegante Verpackung liegt dann vor, wenn der Bereich des Gehäuses ungefähr die untere Hälfte bildet (180°), und der Deckel einen etwas grösseren Winkelbereich überstreicht (beispielsweise 200-220°), der Bereich des Gehäuses bildet dann gewissermassen eine untere Wanne, welche sich auch zum vorderen Ende hin noch weiter erstreckt und den offenen Bereich bildet, während der Deckel nur bis zur Gehäusewand reicht.

Insbesondere hinsichtlich einer einfachen Entnahme des Implantates nach dessen Benetzung ist es von Vorteil, wenn das Gehäuse wenigstens an seinem vorderen Ende über zwei seitliche, vorzugsweise tangential und im wesentlichen parallel zueinander oder nach unten erweiternd (umgekehrt V-förmig) angeordnete (typischerweise gleich lange), nach unten vorstehende Füsse verfügt (Standstabilität) sowie vorzugsweise daran anschliessende und zum hinteren Ende erstreckende Stege (zusätzliche Stabilisierung des Standes auch im hinteren Bereich), wobei die Gehäusewand derart angebunden ist, dass ein gegeneinander pressen der beiden Füsse eine die Entnahme des Implantats erleichternde Erweiterung des verjüngten Schlitzes bewirkt.

Eine weitere bevorzugte Ausführungsform der Verpackung ist dadurch gekennzeichnet, dass das Gehäuse im wesentlichen als länglicher, nach oben offener Kasten ausgebildet ist, dass an einem vorderen Ende der Bereich, in welchen normalerweise die Montageanordnung aus der Verpackung herausragt, angeordnet ist und an einem gegenüberliegenden hinteren Ende die Flüssigkeitspatrone. Die Flüssigkeitspatrone kann dabei vorzugsweise in zylindrischer Form mit ihrer Achse senkrecht zur Längsrichtung des Gehäuses ausgebildet sein, das heisst im hinteren Bereich kann die Verpackung auch abgerundet ausgestaltet sein. Die Flüssigkeitspatrone kann aus der Verpackung wenigstens teilweise nach oben herausragend angeordnet sein. Der Deckel verschliesst diese obere Öffnung und kann entlang der Längsrichtung des Gehäuses zum hinteren Ende die obere Öffnung freigebend verschoben werden. Alternativ ist es aber auch möglich, den Deckel in einer Schwenkbewegung (beispielsweise um die Achse der Flüssigkeitspatrone) die Öffnung freigebend auszugestalten. Vorzugsweise ist dabei diese öffnende Verschiebung des Deckels nur möglich, wenn entweder die Flüssigkeitspatrone vom Gehäuse entfernt worden ist oder unter Freigabe der Flüssigkeit in das Gehäuse hinein gepresst worden ist. Dies ist beispielsweise möglich, indem die Flüssigkeitspatrone gewissermassen vollständig in das Gehäuse hinein gepresst wird und der Deckel anschliessend darüber hinweg fahren kann.

Bevorzugtermassen ist eine derartige Verpackung dadurch gekennzeichnet, dass die Gehäusewand durch einen ersten Gehäuseteil und einen zweiten Gehäuseteil gebildet wird, dass der Schlitz respektive der erweiterte Bereich und der verjüngte oder sogar geschlossene Bereich (vollständig aneinander grenzend) auf der einen Seite vom ersten und auf der anderen Seite vom zweiten Gehäuseteil begrenzt wird, und dass der erste Gehäuseteil relativ zum zweiten Gehäuseteil im wesentlichen in einer Richtung senkrecht zur Längsachse des Gehäuses unter Erweiterung respektive Öffnung des Bereichs verschoben werden kann. Durch die Verschiebung der beiden Gehäuseteile gegeneinander öffnet sich aufgrund der Tatsache, dass die beiden Seiten des Schlitzes von unterschiedlichen Teilen gebildet werden, dieser Schlitz, und das Implantat kann wesentlich leichter (oder überhaupt nur dann) nach oben aus dem Schlitz entnommen werden.

Bevorzugtermassen sind im Zusammenhang mit einer solchen Konstruktion Mittel vorgesehen, respektive konstruktive Massnahmen getroffen, welche es verhindern, dass der Schlitz auch bei geschlossenem Deckel (beispielsweise beim Schütteln) geöffnet werden kann und entsprechend das Implantat teilweise freigegeben werden kann. Dies kann bevorzugtermassen dadurch geschehen, dass sowohl der erste Gehäuseteil als auch der zweite Gehäuseteil wenigstens einen auf der gleichen Seite des Gehäuses angeordneten seitlichen Wandabschnitt bilden, dass diese beiden Wandabschnitte um einen Spalt beabstandet sind, und dass der Deckel an seinem dem vorderen Ende zugewandten Ende über einen Führungssteg verfügt, welcher wenigstens teilweise in diesen Spalt eingreift. Ist bei einer solchen Konstruktion der Deckel in der geschlossenen Position, so ist der Spalt durch diesen Führungssteg ausgefüllt und die beiden Gehäuseteile können nicht gegeneinander verschoben werden. Wird nun der Deckel nach hinten verschoben, so verschiebt sich der Führungssteg aus dem vorderen Bereich des Spaltes und aufgrund der Flexibilität der normalerweise verwendeten Materialien kann dann der vordere Bereich des Spaltes verjüngt werden und dadurch die Öffnung freigegeben werden (dies kann auch unterstützt werden durch ein Federelement, z.B. ein kleines Federblech).

Als Materialien für die Verpackung inkl. Deckel, Gehäuse sowie Flüssigkeitspatrone finden bevorzugtermassen Kunststoffe Verwendung, beispielsweise PMMA, PA beispielsweise Grilamid TR 70 (Ems Chemie AG, CH), POM, PET, PBT, Polyethylen, Polypropylen, Fluorpolymere, PEEK, PPS, Styrolpolymere, Polycarbonate, beispielsweise Makrolon, und Polyimide, COC (Cycloolefincopolymer), gegebenenfalls in Kombination mit einer Aluminiumsschicht. Die Verwendung dieser Materialien, einzeln oder in Kombination (Bikomponenten-Bauweise oder z.B. Deckel anderes Material als Gehäuse oder Flüssigkeitspatrone), ist für alle beschriebenen Ausführungsformen möglich und von Vorteil. Bevorzugt finden für die Flüssigkeitspatrone Materialien (auch für die Membran) Anwendung, die Wasser- und Dampfdicht sind und dies auch nach einem Sterilisieren durch Gammaastrahlen. So ist es z.B. möglich, die Flüssigkeitspatrone aus COC (z.B. aus Topas erhältlich von TOPAS Advanced Polymers GmbH, DE) zu fertigen und den Rest der Verpackung aus Polyamid, z.B. einem Grilamid Typ der Firma EMS Chemie, CH.

Als Membran findet vorzugsweise eine Folie Anwendung. Bevorzugtermassen findet eine Siegelfolie Anwendung, welche auf den oberen umlaufenden Rand der Flüssigkeitspatrone nach deren Füllung vorzugsweise in einem Heißsiegelprozess oder einem Kaltsiegelprozess aufgesiegelt werden kann. Die Folie kann dabei aus einem einzigen Material bestehen oder aber vorzugsweise aus einem Verbund. So kann die Membran eine Aluminiumschicht beinhalten, welche auf der der Flüssigkeitspatrone zugewandten Seite eine Siegelschicht aufweist. Bei der Siegelschicht kann es sich um eine Polyethylenschicht handeln, vorzugsweise um eine Schicht auf Basis von LLDPE. Die Aluminiumschicht kann auf der gegenüberliegenden Seite eine weitere Kunststoffschicht beispielsweise aus PET aufweisen.

Normalerweise ist, damit der Inhalt der Verpackung oder Öffnung derselben erkannt werden kann, der Deckel und/oder wenigstens Bereiche des Gehäuses transparent oder transluzent ausgebildet, so dass ein in der Verpackung angeordnetes Implantat und/oder eine in oder an der Verpackung angeordnete Einheilkappe erkannt werden kann.

Des weiteren betrifft die vorliegende Erfindung eine Verpackung, wie sie oben beschrieben worden ist, mit einem darin angeordneten Dentalimplantat, wobei vorzugsweise in der Flüssigkeitspatrone eine Flüssigkeit angeordnet ist, mit welcher die Oberfläche des Dentalimplantates kurz vor dessen Einsetzen in den menschlichen Körper benetzt und/oder gespült und/oder beschichtet wird. Bei dieser Flüssigkeit kann es sich beispielsweise um eine wässrige Lösung einer wenigstens eine der folgenden Wirkungen zeigenden Komponente handeln (auch Mischungen solcher Komponenten sind möglich): Förderung der Einheilung, Verhinderung der Entzündungsbildung oder von Infektionen, Förderung des Knochenwachstums, Förderung des Gewebewachstums oder der Gewebeanhaftung am Implantat, Verhinderung des Knochenabbaus, Stabilisierung oder Verbesserung der Knochendichte in der Implantatumgebung, Verbesserung des Knochen Implantat Kontaktes durch Erhöhung der am Implantat angewachsenen Menge Knochen oder Weichgewebe. Möglich sind beispielsweise wässrige Lösungen wie Salzlösungen, pharmazeutische Formulierungen, und ähnliche Systeme, sowie Mischungen davon.

Weiterhin vorzugsweise ist eine solche Verpackung zusätzlich in einem sterilen Beutel oder Blister eingepackt. Dieser Beutel ist vorzugsweise so ausgestaltet, dass er die Manipulation der Verpackung bei geschlossenem Beutel ermöglicht. So kann er beispielsweise aus einem flexiblen wenigstens teilweise transparentem Material bestehen. So ist es möglich, dass in einem ersten Schritt unter nicht-sterilen Bedingungen (beispielsweise durch assistierendes Personal) ohne Öffnung dieses Beutels die Flüssigkeitspatrone unter Freigabe der darin befindlichen Flüssigkeit eingepresst oder verdreht wird und die Verpackung (inklusive Beutel) mit dem darin befindlichen Dentalimplantat unter Benetzung desselben bewegt respektive geschüttelt wird. Anschließend kann die so vorbereitete Verpackung (immer noch im geschlossenem Beutel) in einen sterilen Bereich gebracht werden und erst dort der Beutel geöffnet werden. So kann ein weiterer Schritt der Vorbereitung in den vorgelagerten nicht-sterilen Arbeitsabschnitt gelegt werden und so Prozessabläufe verbessert werden.

Zudem betrifft die vorliegende Erfindung ein Verfahren zur Benetzung und anschliessenden Entnahme eines Dentalimplantats aus einer Verpackung, wie sie oben beschrieben worden ist. Das Verfahren ist bevorzugtermassen dadurch gekennzeichnet, dass optional in einem ersten Schritt eine Flüssigkeitspatrone mit der geeigneten Flüssigkeit in die Verpackung eingesetzt oder auf diese aufgesetzt wird, dass die Flüssigkeitspatrone unter Freigabe der darin befindlichen Flüssigkeit in den Aufnahmeraum in die Verpackung eingepresst oder verdreht wird, dass die Verpackung mit dem darin befindlichen Dentalimplantat unter Benetzung desselben bewegt respektive geschüttelt wird, dass die Verpackung durch Verschieben oder Verschwenken des Deckels geöffnet und das Dentalimplantat, an der Montagehalterung ergriffen, aus der Verpackung entnommen wird. Vorgängig zu diesen Schritten wird eine solche Verpackung normalerweise aus einem sterilen Beutel oder Blister entnommen, indem dieser aufgerissen wird. Optional kann, normalerweise nachdem das Implantat eingesetzt worden ist, das heisst in einem wenigstens mittelbar anfolgenden Schritt, der Deckel wieder teilweise verschlossen werden (oder über die Öffnungsposition hinausgeschoben werden) und zwar derart, dass die Einheilkappe freigelegt wird, und diese aus der Verpackung entnommen wird.

Weitere bevorzugte Ausführungsformen der Erfindung sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:

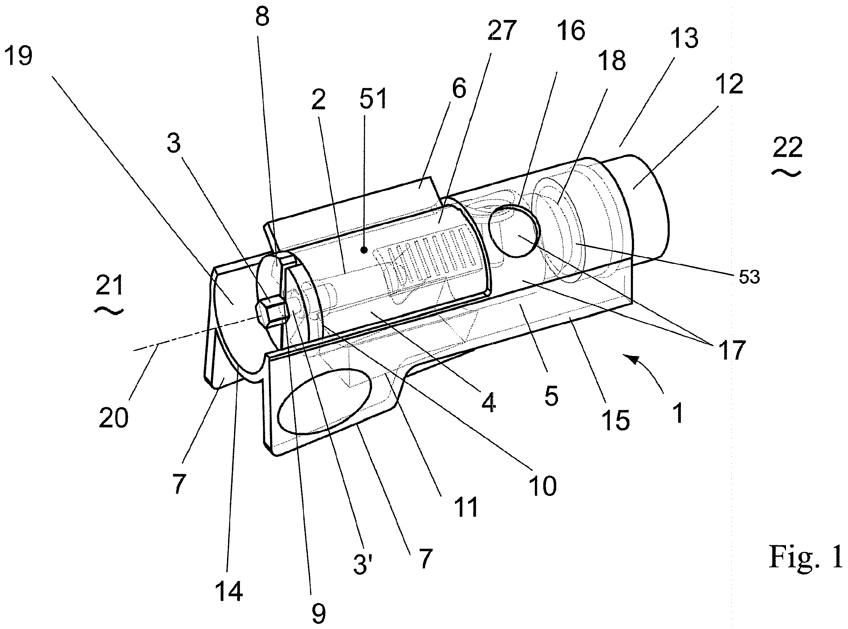

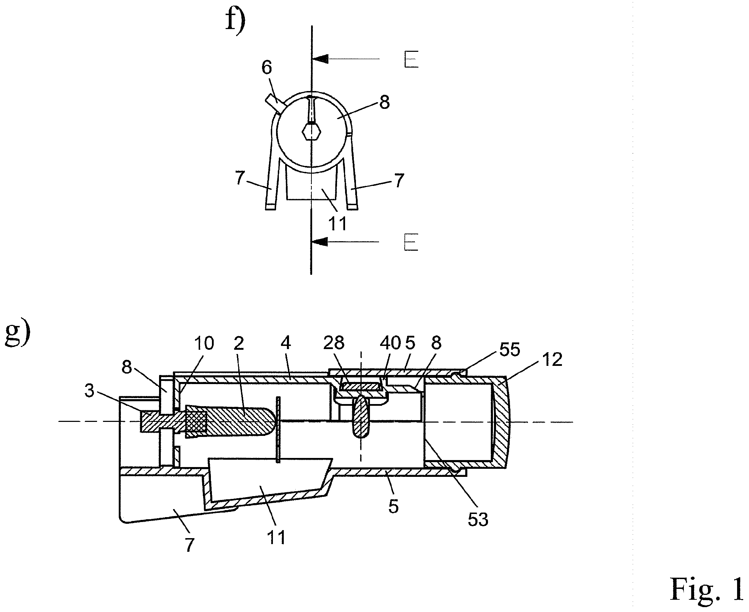

- Fig. 1: eine perspektivische Ansicht auf eine verschlossene Verpackung nach einem ersten Ausführungsbeispiel, sowie in a) eine Seitenansicht und in den Figuren b) - e) die darin angegebenen Schnitte, namentlich in b) einen Schnitt gemäss A-A senkrecht zur Achse durch die vordere Abschlussplatte, in c) einen Schnitt gemäss B-B senkrecht zur Achse durch den Dichtungsbereich des Deckels, in d) einen Schnitt gemäss C-C senkrecht zur Achse durch den mittleren Bereich des Deckels, in e) einen Schnitt gemäss D-D senkrecht zur Achse durch die Öffnung für die Einheilkappe, sowie in f) eine Frontalansicht und in g) den darin angegebenen Schnitt E-E, d.h. einen axialen Schnitt in einer senkrechten Ebene;
- Fig. 2: eine perspektivische Ansicht auf eine Packung gemäss Figur 1, wobei die Flüssigkeitspatrone eingedrückt ist;
- Fig.: 3 eine perspektivische Ansicht auf eine geöffnete Packung gemäss Figur 1 in a) und in b) einen Schnitt senkrecht zur Achse auf der Höhe des Abgrenzstreifens;
- Fig. 4: eine perspektivische Ansicht auf eine geöffnete Packung gemäss Figur 1, bei welcher das Implantat entnommen wird;
- Fig. 5: eine perspektivische Ansicht auf eine geöffnete und leere Packung gemäss Figur 1;
- Fig. 6: eine perspektivische Ansicht auf eine für die Entnahme der Einheilkappe teilgeschlossene Packung gemäss Figur 1;
- Fig. 7: eine perspektivische Ansicht auf eine verschlossene Packung nach einem zweiten Ausführungsbeispiel;
- Fig. 8: eine perspektivische Ansicht auf eine Packung gemäss Figur 7, wobei die Flüssigkeitspatrone eingedrückt ist;
- Fig. 9: eine perspektivische Ansicht auf eine geöffnete Packung gemäss Figur 7;
- Fig.: 10 eine perspektivische Ansicht auf eine geöffnete Packung gemäss Figur 7, bei welcher das Implantat entnommen wird;
- Fig. 11: eine perspektivische Ansicht auf den vorderen Dichtungsbereich einer geöffneten und leeren Packung gemäss Figur 7;
- Fig. 12: eine perspektivische Ansicht auf eine für die Entnahme der Einheilkappe teilgeschlossene Packung gemäss Figur 7;
- Fig.: 13 eine perspektivische Ansicht auf eine verschlossene Verpackung nach einem dritten Ausführungsbeispiel, sowie in a) eine Seitenansicht und in den Figuren b) - e) die darin angegebenen Schnitte, namentlich in b) einen Schnitt gemäss A-A senkrecht zur Achse durch die vordere Abschlussplatte, in c) einen Schnitt gemäss B-B senkrecht zur Achse durch den Dichtungsbereich des Deckels, in d) einen Schnitt gemäss C-C senkrecht zur Achse durch den mittleren Bereich des Deckels, in e) einen Schnitt gemäss D-D senkrecht zur Achse durch die Öffnung für die Einheilkappe, sowie in f) eine Frontalansicht und in g) den darin angegebenen Schnitt E-E, d.h. einen axialen Schnitt in einer senkrechten Ebene;
- Fig.: 14 eine perspektivische Ansicht auf eine Packung gemäss Figur 13, wobei die Flüssigkeitspatrone eingedrückt ist;

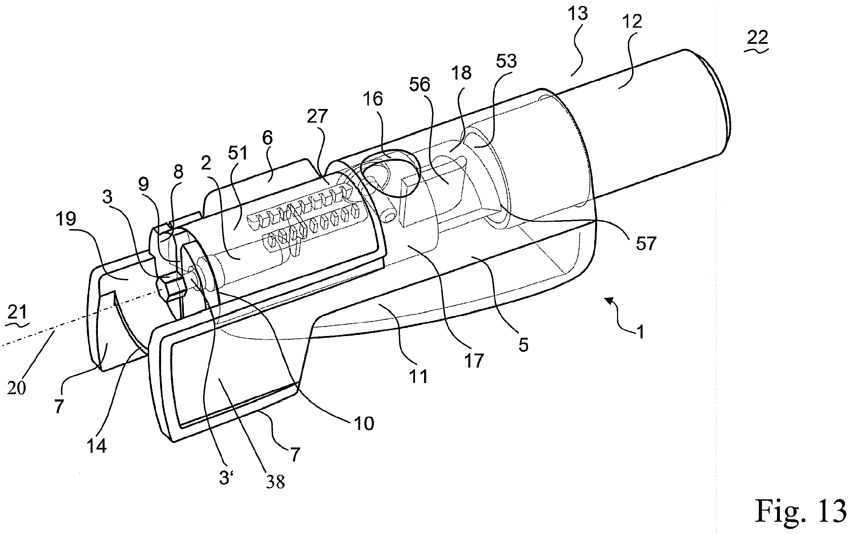

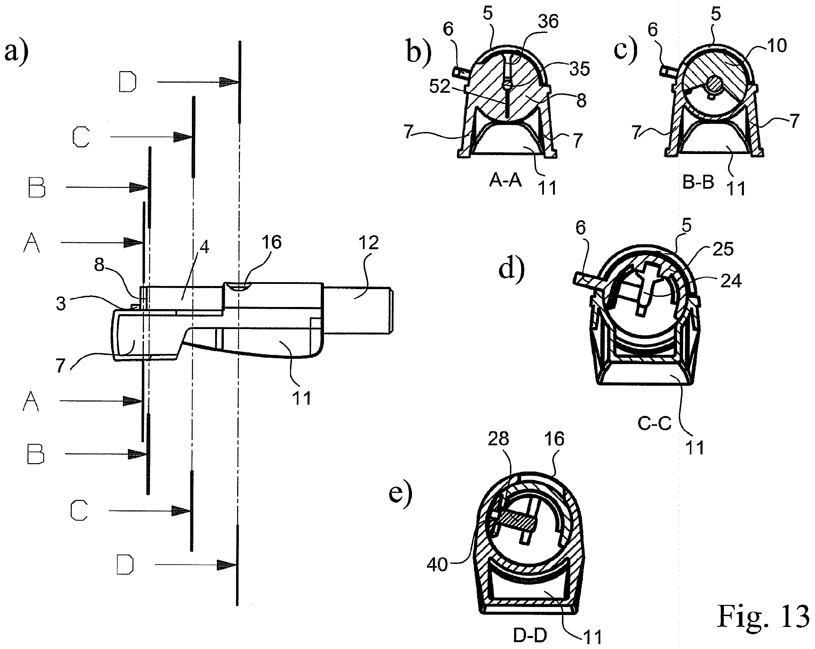

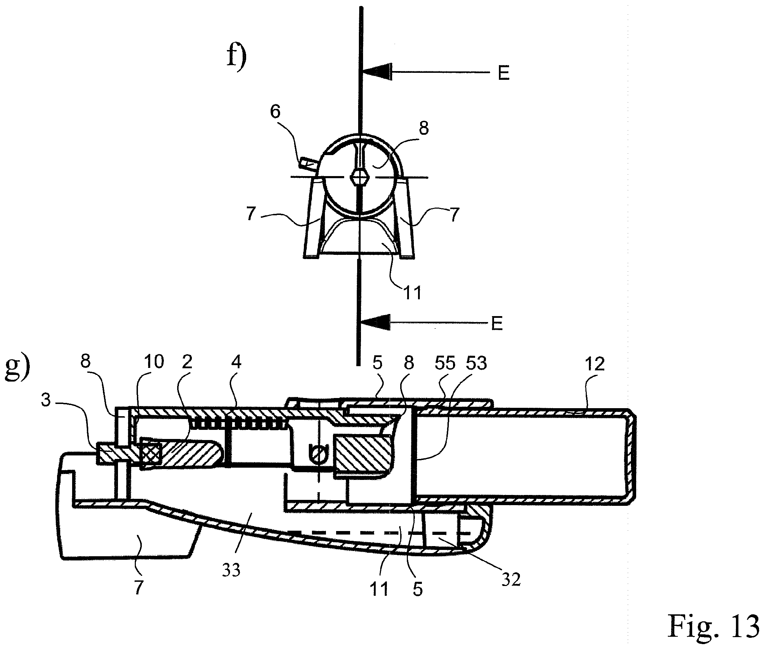

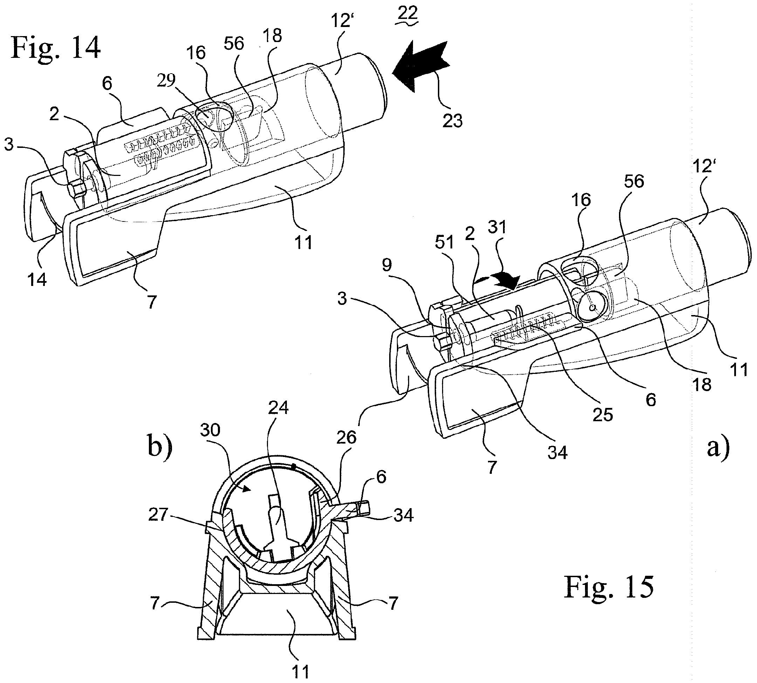

- Fig. 15: eine perspektivische Ansicht auf eine geöffnete Packung gemäss Figur 13 in a) und in b) einen Schnitt senkrecht zur Achse auf der Höhe des Abgrenzstreifens;

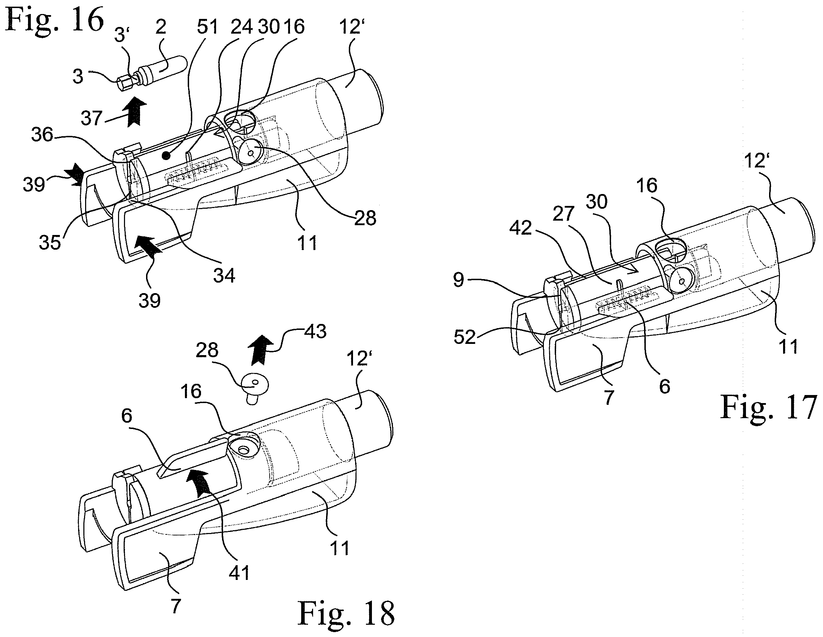

- Fig. 16: eine perspektivische Ansicht auf eine geöffnete Packung gemäss Figur 13, bei welcher das Implantat entnommen wird;
- Fig. 17: eine perspektivische Ansicht auf eine geöffnete und leere Packung gemäss Figur 13; und
- Fig. 18: eine perspektivische Ansicht auf eine für die Entnahme der Einheilkappe teilgeschlossene Packung gemäss Figur 13..

### WEGE ZUR AUSFÜHRUNG DER ERFINDUNG

In der Folge soll die Erfindung anhand von Ausführungsbeispielen im Zusammenhang mit den Zeichnungen näher erläutert werden, die Zeichnungen und die nun anfolgende Beschreibung dienen der Erläuterung und der Stützung des eigentlichen in den Ansprüchen definierten Schutzbegehrens, die Beschreibung soll aber nicht dazu ausgelegt werden, die Ansprüche einschränkend auszulegen.

Ein erstes Ausführungsbeispiel einer solchen Verpackung ist in den Figuren 1 bis 6 dargestellt. Die Verpackung 1 ist im Wesentlichen zylinderförmig ausgestaltet und verfügt über ein Gehäuse 5 sowie über einen Deckel 4, unter welchem das Dentalimplantat 2 angeordnet ist. Das Dentalimplantat ist dabei im Wesentlichen auf der Achse des Behälters angeordnet (die Achse ist mit dem Bezugszeichen 20 angegeben).

In Figur 1 ist eine perspektivische Ansicht des geschlossenen Verpackungsbehälters mit darin angeordnetem Dentalimplantat dargestellt. Das Dentalimplantat ist, was das eigentliche Implantat angeht, welches in den menschlichen Körper zu dessen Verbleib darin eingesetzt wird, in einem Aufnahmeraum 51 der Verpackung angeordnet. Die Montagehalterung 3, hier als Sechskant ausgebildet, ragt aus diesem Aufnahmeraum 51 hinaus und zwar indem ein zwischen der Montagehalterung 3 und dem eigentlichen Implantat 2 angeordneter Hals 3' in einer Gehäusewand oder vorderen Abschlussplatte 8 festgeklemmt ist. Ein in dieser Gehäusewand 8 angeordneter Schlitz 9 greift dabei in den verjüngten Bereich des Halses 3' ein.

Die Verpackung verfügt über eine Vorderseite 21 oder ein vorderes Ende und über ein hinteres Ende 22. Das eigentliche Gehäuse 5 verfügt im hinteren Bereich über einen im Wesentlichen geschlossenen zylindrischen Abschnitt, und zum vorderen Ende 21 hin ist in diesem zylindrischen Abschnitt ein Fenster vorgesehen, so dass im vorderen Bereich das Gehäuse als oben offenes Hohlzylindersegment ausgebildet ist. Entsprechend ist das eigentliche Gehäuse im vorderen Bereich in Form einer Wanne ausgebildet, in welcher die kreisscheibenförmige Gehäusewand 8 senkrecht zur Achse 20 befestigt ist. Diese Gehäusewand 8 bildet die Trennwand zwischen dem offenen Bereich 19, in welchem die Montagehalterung 3 zur Ankopplung eines Werkzeuges frei liegt, und dem eigentlichen Aufnahmeraum 51 für das Dentalimplantat. Dieser Aufnahmeraum 51 wird durch den um die Achse 20 drehbaren und im Gehäuse 5 gelagerten Deckel 4 verschlossen. Der Deckel 4 verfügt über einen axial verlaufenden Griff 6. Der Deckel erstreckt sich auf der vorderen Seite bis zur Gehäusewand 8 und verfügt an seiner vorderen Seite zudem über einen Dichtungsbereich 10 welcher ebenfalls als senkrecht zur Achse angeordneter Wandbereich ausgebildet ist und mit dem Deckel normalerweise einstückig ausgebildet ist. Dieser Dichtungsbereich 10 grenzt möglichst bündig an die vordere Abschlussplatte 8 an und dichtet entsprechend im geschlossenen Zustand, wie dies in Figur 1 dargestellt ist, den Aufnahmeraum 51 ab, da dieser ohne Anwesenheit dieser zusätzlichen Wand 10 ein Loch im Bereich des Schlitzes aufweisen würde. Entsprechend verfügt der Dichtungsbereich 10 im Bereich des Implantates zusätzlich über eine halbkreisförmige Ausnehmung, in welche der Hals 3' zu liegen kommt.

Auf der hinteren Seite erstreckt sich der Deckel 4 aber noch weiter in den zylindrischen Bereich des Gehäuses hinein und gleitet in diesem. Unter anderem dadurch wird die Führung des Deckels im Inneren des zylinderförmigen Gehäuses gewährleistet. In diesem hinteren Bereich ist aber bei diesem Ausführungsbeispiel zudem auch die Einheilkappe 28 angeordnet. Die Einheilkappe 28 ist am Deckel 4 befestigt.

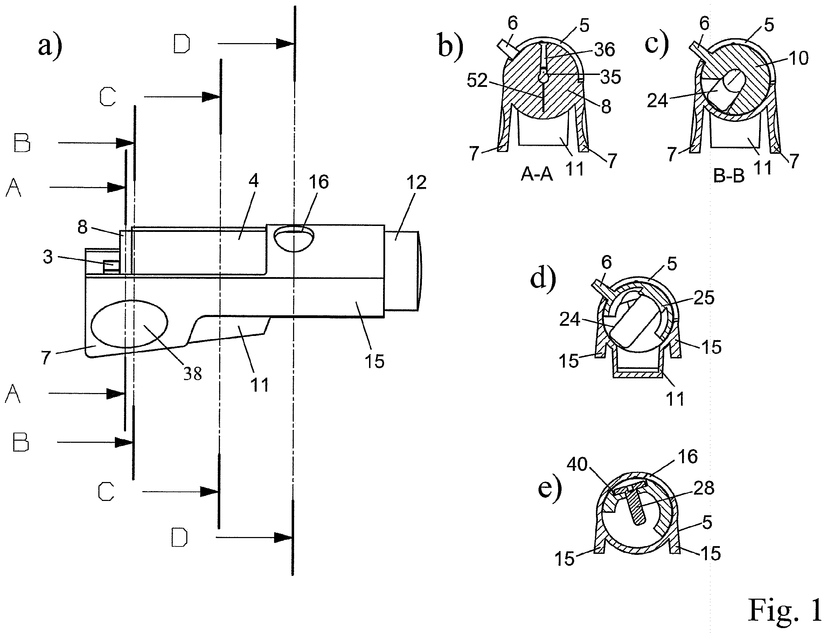

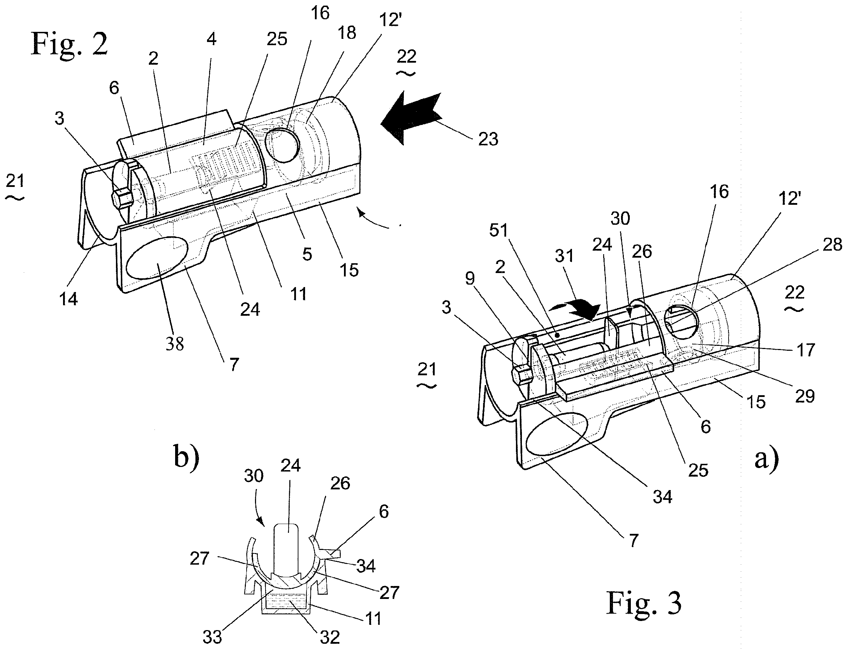

Ganz am hinteren Ende 22 der Verpackung 1 ist eine Flüssigkeitspatrone 12 angeordnet, welche als Zylinder ausgebildet ist und welche im Wesentlichen teilweise in den Innenraum des Gehäuses eingeschoben ist. Die Flüssigkeitspatrone 12 grenzt dabei an eine Auslösekonstruktion 18, welche in diesem Fall als am Deckel angeformte, gekrümmte Einstichvorrichtung vorgesehen ist und welche, wenn, wie dies in Figur 2 dargestellt ist, die Flüssigkeitspatrone entlang einer Eindrückrichtung 23 in das zylindrische Gehäuse hineingepresst wird, dazu führt, dass die Flüssigkeitspatrone 12 respektive deren Membran 53 aufgestochen wird und der in der Flüssigkeitspatrone enthaltene Flüssigkeitsanteil in den Aufnahmeraum 51 bei geschlossenem Deckel 4 einströmen kann. Die Flüssigkeit 32 fliesst dabei in einen unten an den zylindrischen Bereich des Behälters angeformten Auffangbehälter 11 ein und sammelt sich in diesem. Die Flüssigkeitspatrone 12 verfügt an ihrem in das Gehäuse 5 hineinragenden zylindrischen Umfang über einen umlaufenden oder nur abschnittsweise ausgebildeten Kamm 55, welcher in eine entsprechende umlaufende Nut in der Innenfläche des zylindrischen Bereiches des Gehäuses 5, in welchem die Flüssigkeitspatrone 12 angeordnet ist, eingreift. Durch diese Nut/Kamm-Befestigung wird die Flüssigkeitspatrone 12 für den Transport und vor denen Aufstechen gehalten, die Flüssigkeitspatrone kann aber trotzdem leicht bei der Montage in das Gehäuse eingesetzt werden.

Des Weiteren verfügt das Gehäuse 5 einerseits im vorderen Bereich über zwei Füsse 7, welche gewissermassen tangential am zylindrischen Bereich 14 angeformt sind, und im Sinne von Verlängerungen von diesen Füssen 7 zum hinteren Bereich hin über Stege 15. Die Füsse 7 zusammen mit den Stegen 15 führen dazu, dass die Verpackung 1 ohne weiteres auf einer Fläche stabil abgestellt werden kann. Ebenfalls am Deckel 4 angeformt, neben einer Halterung für die Einheilkappe, ist ein Raster 25, in welchem je nach Länge des Dentalimplantates 2 ein Abgrenzstreifen 24 festgeklemmt werden kann. Wurde die Flüssigkeitspatrone, wie dies in Figur 2 dargestellt ist, ausgelöst und befindet sich die Flüssigkeit 32 im Auffangbehälter 11 und damit im Aufnahmeraum 51 für das eigentliche Implantat, kann die Verpackung geschüttelt werden und dabei findet eine Benetzung der Oberfläche des eigentlichen Implantates 2 mit der Flüssigkeit 32 statt.

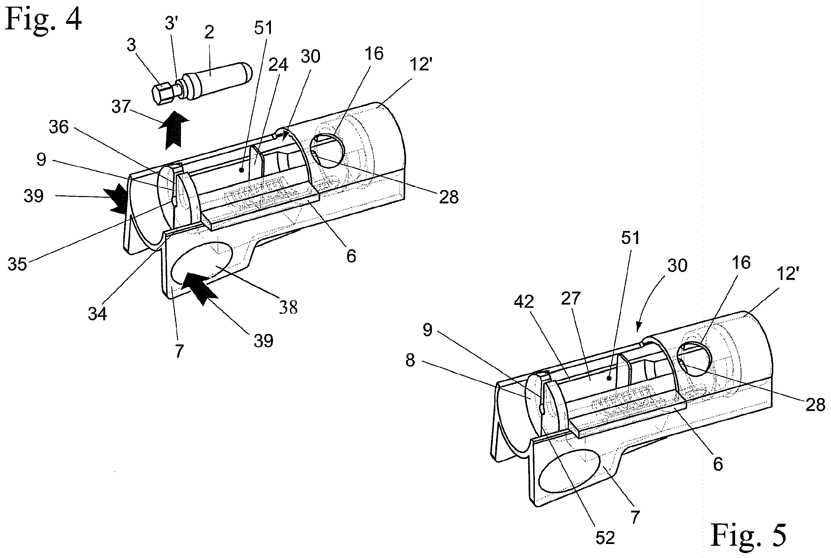

Anschliessend kann, wie dies in Figur 3 dargestellt ist, durch ein Ergreifen des Deckels am Griff 6 und ein Umschwenken desselben entlang der Pfeils 31 der Behälter geöffnet werden. Dabei wird die Entnahmeöffnung 30 freigelegt und zugleich aber auch der Schlitz 9 in der vorderen Abschlussplatte 8 freigegeben. Nun kann, wie dies in Figur 4 dargestellt ist, das Implantat 2 durch Ergreifen an der Montagehalterung 3 aus dem erweiterten Bereich 35 des Schlitzes 9 herausgelöst und durch den verjüngten Bereich 36 des Schlitzes 9 nach oben hinaus geschoben werden. Um dies zu erleichtern, werden die beiden Füsse 7 gegeneinander gepresst, wie dies durch die Pfeile 39 dargestellt ist. Durch dieses Zusammenpressen weitet sich der verjüngte Bereich 36 aufgrund der Elastizität der verwendeten Materialien auf und das Dentalimplantat 2 kann im Wesentlichen ohne Kraftaufwendung nach oben aus der Verpackung entnommen werden. Eine Grifferleichterung 38 (Vertiefung, Führungsnute/Stege) kann dabei die Handhabung erleichtern.

Im Zusammenhang mit Figur 5 soll zudem noch gezeigt werden, wie in der vorderen Abschlussplatte 8 vorzugsweise ein Spreizschlitz 52 angeordnet ist, welcher sich vom Spalt 9 ausgehend nach unten hin erstreckt. Dieser Spreizschlitz 52 ist normalerweise so gut wie vollständig geschlossen und im wesentlichen dicht, er dient dazu, die Aufspreizung der vorderen Abschlussplatte 8 bei einem Pressen gemäss Pfeil 39 in Figur 4 zu erleichtern.

Der so geöffnete Behälter kann nun problemlos stehengelassen werden (vgl. Figur 5), da die Einheilkappe immer noch im Inneren des Behälters angeordnet ist und entsprechend nicht freigelegt ist und verschmutzt werden kann, und da sich des Weiteren, wie dies insbesondere aus dem Schnitt gemäss Figur 3b) erkannt werden kann, der Deckel 4 zudem auch über den Auffangbehälter 11 und dessen obere Zugangsöffnung 33 hinüber geschoben hat und damit die im Auffangbehälter 11 angeordnete Flüssigkeit 32 nach oben bedeckt. Die Flüssigkeit 32 liegt entsprechend nicht frei und kann auch nicht verschmutzt werden oder aus dem durch den Deckel abgedeckten Bereich austreten, sollte aus Versehen ein solcher Behälter z.B. umgekippt werden.

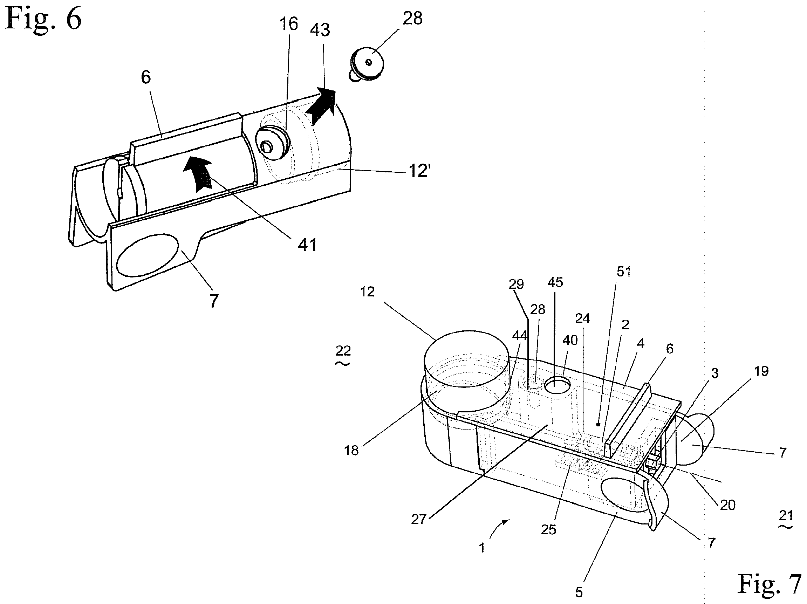

Wie dies insbesondere in Figur 3 dargestellt ist, ist im zylindrischen Bereich des Gehäuses eine Öffnung 16 für die Einheilkappe 28 vorgesehen. Die eigentliche Einheilkappe 28 ist im Deckel 4 befestigt und zwar über eine Halterung 29. Die Einheilkappe 28 kann aber erst zugänglich gemacht werden, wenn der Deckel 4, wie dies in Figur 6 dargestellt ist, in eine mittlere Position zurückgedreht wird entlang Pfeil 41, sodass die Öffnung 16 im Gehäuse mit einer im Deckel vorgesehenen Entnahmeöffnung 40 in Deckung gebracht wird. Nun kann von aussen über ein entsprechendes Werkzeug die Einheilkappe 28 ergriffen werden und diese, wie dies mit dem Pfeil 43 dargestellt ist, aus der Verpackung entnommen werden. Dadurch ist die Einheilkappe 28 sowohl bei geschlossener Verpackung (vgl. Figur 1) als auch bei geöffneter Verpackung (vgl. bspw. Figur 5) stets im Inneren der Verpackung und vollständig geschützt angeordnet und es ist ein gezielter separater Schritt erforderlich, um die Einheilkappe freizulegen. Dies ist ein wesentlicher Vorteil bspw. gegenüber den bekannten Verpackungen für solche Dentalimplantate, bei welchen normalerweise beim Öffnen eines Deckels gleichzeitig auch die Einheilkappe freigelegt wird, was problematisch ist, wenn mit der Verpackung nicht sorgfältig umgegangen wird.

In diesem Ausführungsbeispiel ist die Einheilkappe 28 gewissermassen in einem Sackloch im Deckel 4 angeordnet. Entsprechend wird die Einheilkappe auch durch die Flüssigkeit 32 nicht berührt oder benetzt. Dies ist normalerweise die bevorzugte Variante, da die Einheilkappe ja mit dem menschlichen Gewebe in der Regel nicht in Kontakt kommt (normalerweise dient sie dazu, das Sackloch im Implantat für eine beschränkte Zeitspanne bis zum Aufsetzen der eigentlichen Krone zu verschliessen), und da die Einheilkappe auch nicht einwachsen soll. Insbesondere dann, wenn die Flüssigkeit, wie normalerweise bevorzugt, eine die Einheilung begünstigende Wirkung zeigt, wäre es sogar von Nachteil, wenn die Einheilkappe von dieser die Einheilung begünstigenden Flüssigkeit benetzt würde. Es ist aber durchaus auch möglich, die Einheilkappe so im Behälter anzuordnen, dass sie beim Schütteln ebenfalls durch die Flüssigkeit benetzt wird, dies kann bspw. dann von Vorteil sein, wenn die Flüssigkeit ausschliesslich dazu dient, bspw. Entzündungen zu verhindern, was bei der Einheilkappe 28 auch erwünscht sein kann. So ist beispielsweise beim dritten Ausführungsbeispiel (vergleiche weiter unten) die Einheilkappe so eingelassen, dass deren unterer, später in das Implantat eingeführter Teil durch die Flüssigkeit benetzt werden kann. Der obere Teil der Einheilkappe hingegen, welcher nach der Implantation mit dem menschlichen Gewebe in Kontakt kommen könnte, wird dagegen im wesentlichen nicht benetzt. Eine solche Bauweise hat den Vorteil, dass die Verpackung einfacher gestaltet werden kann, da für den unteren Teil kein gegenüber der Flüssigkeit abgedichteter Bereich im Deckel vorgesehen werden muss.

Ein weiteres Ausführungsbeispiel einer Verpackung ist in den Figuren 7 bis 12 dargestellt. Die Verpackung 1 ist in diesem Fall als länglicher Kasten 5 ausgebildet, bei welchem am vorderen Ende 21 der offene Bereich 19 ebenfalls zwischen zwei Füssen 7 angeordnet ist, dort wo die Montagehalterung 3 aus dem Aufnahmeraum 51 hinausragt.

Am hinteren Ende 22 befindet sich die Flüssigkeitspatrone 12, auch hier ist die Flüssigkeitspatrone 12 zylindrisch ausgebildet, ist aber hier gewissermassen von oben auf die kastenförmige Verpackung aufgesetzt und ragt über diese hinaus. Entsprechend ist die kastenförmige Verpackung am hinteren Ende 22 auch abgerundet ausgestaltet. Die Auslösekonstruktion 18 befindet sich unterhalb der Flüssigkeitspatrone 12.

Das Gehäuse 5 verfügt über einen Boden und zwei Seitenwände und am Boden ist ein Raster 25 angeordnet, in welchem wiederum ein Abgrenzstreifen 24 entsprechend der Dimensionierung des Implantates festgeklemmt werden kann. Das Gehäuse 5 verfügt an der Oberseite über eine Öffnung, welche durch den Deckel 4 verschlossen wird, welche diese Öffnung vollständig abschliesst. Der Deckel 4 verfügt an seinem vorderen Ende über einen Griff 6 und ist transparent ausgebildet. Der Deckel verschliesst damit den Aufnahmeraum 51 nach oben. Der Deckel verfügt über eine Entnahmeöffnung 40 für eine Einheilkappe.

In diesem Fall ist die Einheilkappe 28 aber nicht am respektive im Deckel befestigt, wie beim vorhergehenden Ausführungsbeispiel, sondern es gibt vielmehr im Aufnahmeraum einen hier als Verschlussbereich 27 bezeichneten Bereich, in welchem die Einheilkappe 28 in einer Halterung 29 befestigt ist. Bei geschlossenem Behälter ist die Entnahmeöffnung 40 in Deckung mit dem Bereich 45, entsprechend wird der Aufnahmeraum 51 trotz Anwesenheit der Entnahmeöffnung 40 flüssigkeitsdicht verschlossen. Auch bei diesem Ausführungsbeispiel ist die Einheilkappe 28 zwar im Aufnahmeraum 51 angeordnet, kommt aber bei im Aufnahmeraum 51 vorhandener Flüssigkeit mit dieser nicht in Kontakt, da sie in der Abdeckung 45 in einer durch den Deckel 4 verschlossenen sacklochartigen Ausnehmung gefangen ist.

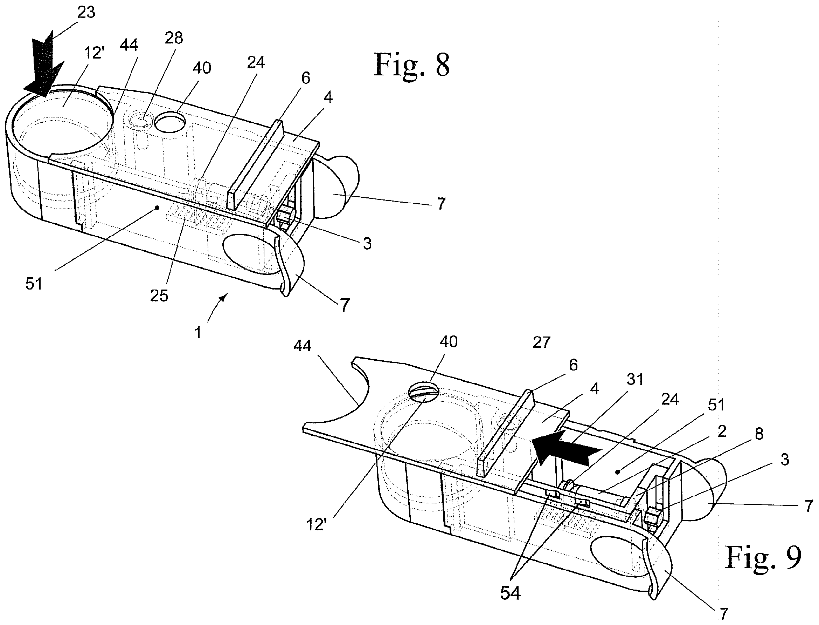

Wie in Figur 8 dargestellt kann nun hier die Flüssigkeitspatrone 12 durch ein Eindrücken entlang des Pfeils 23 in die Verpackung hineingepresst werden und dabei wird die in der Patrone gelagerte Flüssigkeit von dieser freigegeben und strömt in den Aufnahmeraum 51 ein. Wie bereits im Zusammenhang mit dem ersten Ausführungsbeispiel sei darauf hingewiesen, dass die Patrone auch durch eine Drehbewegung ausgelöst werden kann oder durch eine kombinierte Bewegung, bei welcher sowohl gedreht als auch nach unten gepresst wird (bspw. indem im Gehäuse in jenem Bereich, wo die Patrone angeordnet ist, ein Innengewinde ausgebildet ist und die Patrone über eine entsprechendes Aussengewinde verfügt). Nachdem die Patrone nun ausgelöst ist, kann das Implantat durch Schütteln mit der im Aufnahmeraum 51 befindlichen Flüssigkeit benetzt oder beschichtet werden.

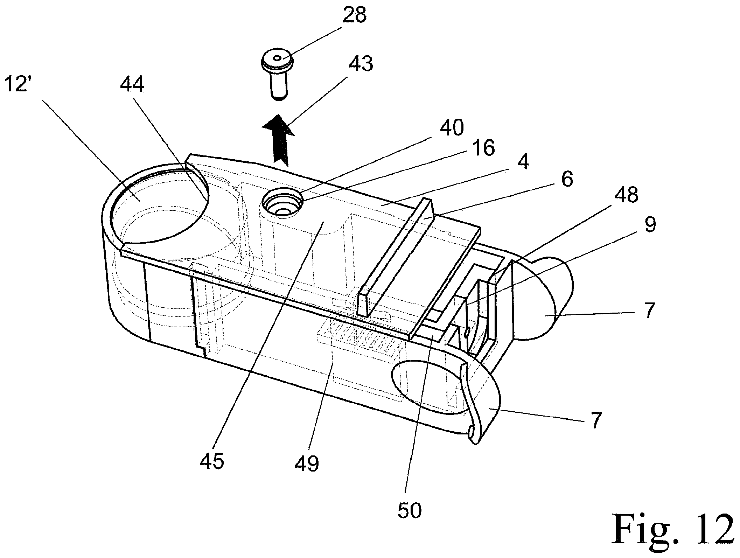

In Figur 9 wird dargestellt, wie die Verpackung durch ein Verschieben des Deckels 4 in eine Richtung 31 nach hinten geöffnet werden kann. Der Deckel 4 verfügt an seinem hinteren Ende über eine runde Ausnehmung 44. Im geschlossenen Zustand (vgl. Figur 7) grenzt diese Ausnehmung 44 an die Umfangsfläche der Flüssigkeitspatrone. Ist nun die Flüssigkeitspatrone 12, wie dies in Figur 9 dargestellt ist, vollständig in den Behälter hineingepresst, wird die Ausnehmung 44 freigelegt und entsprechend kann der Deckel 4 auch nur nach hinten geschoben werden, wenn die Flüssigkeitspatrone 12 entweder vollständig eingepresst ist (12') oder aber vorgängig entfernt worden ist. Des weiteren sind Rastausnehmungen 54 an der auf einer Seite doppelwandig ausgestalteten Kastenform im Spalt zwischen den beiden Wänden erkennbar. Der weiter unten im Detail beschriebene Führungssteg 49 verfügt über eine entsprechende auf der gleichen Höhe angeordnete und nach innen gerichtete Rastnase, welche durch deren Eingriff in die Rastausnehmungen 54 die geschlossene Position des Deckels definiert (Rastausnehmung rechts) sowie die Position zur Entnahme der Einheilkappe (vergleiche Figur 12, Rastausnehmung links).

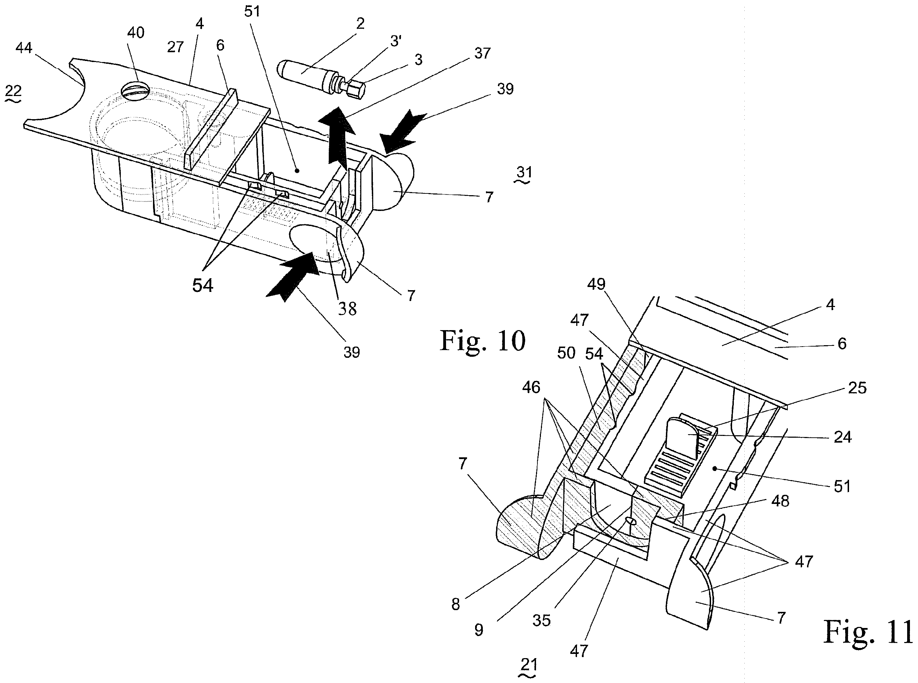

Das nun freigelegte Implantat 2 kann nun unter Halterung an der Montagehalterung 3 aus dem Aufnahmeraum 51 entnommen werden. Dies ist spezifisch in Figur 10 dargestellt.

Hier ist zudem dargestellt, wie diese Entnahme nur möglich ist, wenn die beiden Füsse 7 entlang der Pressrichtung 39 gegeneinander gedrückt werden. Tatsächlich verfügt das Ausführungsbeispiel über einen speziellen Halterungsmechanismus für das Implantat, welcher im Detail im Zusammenhang mit Figur 11 erläutert werden soll. Das Gehäuse ist in diesem Fall zweiteilig ausgestaltet, es gibt einen ersten Gehäuseteil 46 und einen zweiten Gehäuseteil 47, diese beiden Gehäuseteile sind zwar einstückig ausgebildet oder miteinander verbunden, sind aber relativ zueinander im vorderen Bereich 21 verschieblich. Namentlich bildet der erste Gehäuseteil eine im Wesentlichen starre Einheit mit dem in Figur 11 auf der linken Seite dargestellten Fuss 7 und bildet andererseits die auf der rechten Seite des Spaltes 9 respektive der Bereiche 35 und 36 angeordnete Seitenfläche. Gleichermassen bildet dieser erste Gehäuseteil 46 die äussere sich nach hinten erstreckende Seitenwand.

Der zweite Gehäuseteil 47 bildet seinerseits einerseits die rechte sich nach hinten erstreckende Seitenwand, ist konstruktiv starr mit dem rechten Fuss verbunden und bildet zudem aber auch die linke Begrenzungsfläche des Spaltes 9 sowie auch eine zweite innenseitig angeordnete auf der linken Seite sich nach hinten erstreckende Seitenwand. Die beiden Gehäuseteile 46 und 47 sind aufgrund der Flexibilität (Biegeflexibilität) der verwendeten Materialien bei dieser Konstruktion relativ zueinander verschieblich gelagert (gegebenenfalls kann eine Dichtung 48 angeordnet werden, um die Flüssigkeits-Dichtigkeit zu gewährleisten), und da die beiden Teile unterschiedliche Seiten des Spaltes 9 bilden, welche dem jeweilig starr angekoppelten Fuss 7 gegenüberliegen, können die beiden Teile durch Pressen der beiden Füsse 7 gegeneinander verschoben werden und dabei öffnet sich der Spalt 9, sodass der verjüngte Bereich 36 sich erweitert und das Implantat nach oben entnommen werden kann. So ist es möglich, das Implantat wirklich fest im erweiterten Bereich 35 zu haltern und den Bereich 36 so auszugestalten, dass er, bevorzugtermassen ohne weitere Dichtungsmittel, solange die beiden Füsse 7 nicht gegeneinander gepresst werden, flüssigkeitsdicht geschlossen ist.

Sowohl der erste Gehäuseteil 46 als auch der zweite Gehäuseteil 47 bilden einen auf der gleichen Seite des Gehäuses angeordneten seitlichen Wandabschnitt. Diese beiden Wandabschnitte sind um einen Spalt 50 beabstandet. Der Deckel verfügt nun an seinem dem vorderen Ende 21 zugewandten Ende über einen nach unten gerichteten Führungssteg 49, welcher wenigstens teilweise in diesen Spalt 50 eingreift und ungefähr eine Dicke aufweist, welche der Breite dieses Spaltes 50 entspricht. Ist nun der Deckel in der vorderen Positionen, liegt der Führungssteg 49 im Spalt 50 und verhindert, dass dieser zusammen gepresst werden kann, und verhindert damit auch, dass der Spalt 9 geöffnet und das Implantat entnommen werden kann. Erst wenn der Deckel nach hinten geschoben ist und der Führungssteg 49 im Spalt 50 nach hinten verschoben wurde, kann durch ein Zusammenpressen der Füsse 7 im vorderen Bereich der Spalt 50 zusammen gepresst und damit auch der Spalt 9 geöffnet und damit das Implantat freigegeben werden.

In Figur 12 ist der Behälter dargestellt, nachdem der Deckel 4 von der hintersten Position, wie sie in Figur 10 dargestellt ist, wieder etwas nach vorne geschoben worden ist (bevorzugtermassen gibt es hier eine Rast-Zwischenposition), wobei die Entnahmeöffnung 40 nun in Deckung gebracht worden ist mit einer Öffnung 16 für die Einheilkappe in der Abdeckung 45. Entsprechend kann nun die Einheilkappe 28 wie dies durch den Teil 43 dargestellt ist, aus der Verpackung entnommen werden, bspw. indem ein Werkzeug in das oben in der Einheilkappe angeordnete Sackloch eingreift.

In den Figuren 13-18 ist ein drittes Ausführungsbeispiel dargestellt, welches ähnlich ist zum ersten Ausführungsbeispiel. Gleiche Bezugszeichen bezeichnen äquivalente Elemente bei diesem dritten Ausführungsbeispiel, wie sie bereits beim ersten Ausführungsbeispiel verwendet und beschrieben worden sind. Die einzelnen Funktionen einzelner Elemente sowie die Verfahrensschritte der Manipulation sind entsprechend analog zu jenen in den Figuren 1-6 und sollen nicht nochmals wiederholt werden.

Dieses dritte Ausführungsbeispiel unterscheidet sich nun aber insbesondere vom ersten Ausführungsbeispiel dadurch, dass der Auffangbehälter 11 für die Flüssigkeit etwas mehr zur Rückseite der Verpackung verschoben ist, das heißt nicht mehr vollständig nur unter dem Aufnahmeraum 51 angeordnet ist. Der Auffangbehälter 11 wird dadurch gewissermaßen unter jenen Bereich verschoben, in welchen auch die Flüssigkeitspatrone 12 geschoben wird. Wie dies insbesondere aus Figur 13 g erkannt werden kann, wird so der Auffangbehälter 11 im wesentlichen mit seinem Hauptvolumen unter den Gehäuseabschnitt 5, der die Patrone umgibt, verschoben. So ist die Flüssigkeit, wenn sie nicht mehr verwendet wird und im Auffangbehälter liegt, nicht nur durch den Deckel 4, sofern dieser im geöffneten Zustand ist, in diesem Auffangbehälter 11 zurückgehalten, sondern ist grundsätzlich weiter vom Raum 51 entfernt und durch den Bereich der Patrone abgedeckt und so auch weitergehend daran gehindert, auszutreten. Des weiteren ist der Boden des Auffangbehälters 11 zum hinteren Ende der Verpackung hin, das heißt zu jenem Ende hin, wo die Flüssigkeitspatrone angeordnet ist, nach unten geneigt. Die vom Aufnahmeraum 51 in den Auffangbehälter 11 abfließende Flüssigkeit wird so zum hinteren Bereich des Auffangbehälters 11 abgeführt und hauptsächlich in diesem aufgefangen. Zudem wird durch den Auffangbehälter 11 an der hinteren Seite eine Standfläche zur Verfügung gestellt, welche die Stege 15 erübrigt.

Ein weiterer Unterschied zum ersten Ausführungsbeispiel ist in der Ausgestaltung des Auslöseelementes 18 zu sehen. Dieses ist in diesem Fall als ungefähr in einem Viertelkreis geführte Schneidkante ausgebildet, wobei die Kante bezüglich der Ebene der Dichtmembran 53 geneigt ist. Dies führt dazu, dass diese Schneidkante eine der Membran 53 zugewandte Spitze 57 ausbildet, welche im ersten Moment des Einführens der Patrone 12 mit der Membran in Kontakt kommt, so dass sukzessive die Schneidkante 18 beim weiteren hereinschieben der Patrone 12 die Membran 53 im Umlauf weiter aufschneidet. Auf diese Weise wird der Widerstand beim hereindrücken der Patrone 12 reduziert und die Präzision beim aufschneiden erhöht.

Zudem verfügt das Auslöseelement 18 bei diesem Ausführungsbeispiel über einen Wegdrücksteg 56. Dieser ist zentral gewissermaßen innerhalb der Schneidkante angeordnet und vorzugsweise einstückig an dieser angeformt, und führt dazu, dass, wenn die Patrone 12 eingeschoben ist und sich die Schneidkante in die Membran eingeschnitten hat, der zentrale Bereich der Membran auch tatsächlich aus der Öffnung der Patrone 12 nach innen in die Patrone 12 hineingeklappt wird. Wie der Membran 53 zugewandte Vorderkante dieses Stegs 56 liegt dabei vorzugsweise ungefähr auf der axialen Höhe des hintersten Abschnitts der geneigten Schneidkante 18. Infolge der nicht unerheblichen Oberflächenspannung und der häufig verwendeten recht steifen Materialien für die Membran (häufig beinhaltet die Membran eine Metallfolie beispielsweise eine Aluminiumfolie als eine der Schichten) ist es ohne eine solche Maßnahme mit einem Element 56 häufig schwierig, bei einer schmalen Schnittkante durch die Schneidkante überhaupt die Flüssigkeit aus der Patrone 12 in den Aufnahmebereich 51 austreten zu lassen, wenn die Membran nicht aktiv aus dem Weg geschoben respektive geklappt wird.

**BEZUGSZEICHENLISTE**

| | | | |
|---|---|---|---|
| 1 | Verpackung | 18 | Auslöseelement für 12 |
| 2 | Dentalimplantat mit Montage- | 19 | offener Bereich von 1 |
| | halterung | 20 | Achse |
| 2' | Dentalimplantat | 21 | vorderes Ende von 1 |
| 3 | Montagehalterung von 2 | 22 | hinteres Ende von 1 |
| 3' | Hals an 3, Übergangsabschnitt | 23 | Eindrückrichtung für |
| 4 | Deckel | | Flüssigkeitspatrone |
| 5 | Gehäuse | 24 | Abgrenzstreifen |
| 6 | Griff an 4 | 25 | Raster für 24 |
| 7 | Füsse an 5 | 26 | Verschlussüberstand an 4 |
| 8 | vordere Abschlussplatte, | 27 | Verschlussbereich von 4 |
| | Gehäusewand | 28 | Einheilkappe |
| 9 | Schlitz in 8 | 29 | Halterung für 28 an 4 |
| 10 | Dichtungswandabschnitt, | 30 | Entnahmeöffnung |
| | Dichtungsbereich an Deckel zu | 31 | Drehrichtung/Schieberichtung |
| | Abschlussplatte | | für Öffnung von 4 |
| 11 | Auffangbehälter für Flüssigkeit | 32 | Flüssigkeit aus |
| 12 | Flüssigkeitspatrone (ungeöffnet) | | Flüssigkeitspatrone |
| 12' | Flüssigkeitspatrone (geöffnet) | 33 | obere Zugangsöffnung für 11 |
| 13 | Überstand von 12 | 34 | Anschlagkante |
| 14 | hohlzylindersegmentförmiger | 35 | erweiterter Bereich von 9 |
| | Bereich von 5 | 36 | verjüngter Bereich von 9 |
| 15 | Stege an 5 | 37 | Entnahmerichtung für 2 |
| 16 | Öffnung in 5 für Einheilkappe | 38 | Grifferleichterung an 7 |
| 17 | Dichtungsbereich an Deckel zu | 39 | Pressrichtung für Entnahme von |
| | 16 | | 2 |
| 40 | Entnahmeöffnung für 28 in 4 | 50 | Spalt zwischen 46 und 47 |
| 41 | Drehrichtung für Verschluss von | 51 | Aufnahmeraum für Implantat |
| | 4 | 52 | Spreizschlitz |
| 42 | hintere Kante von 4 | 53 | Dichtmembran an 12 |
| 43 | Entnahmerichtung für 28 | 54 | Rastausnehmungen für |
| 44 | Ausnehmung in 4 für 12 | | Rastvorsprünge an 49 |
| 45 | Abdeckung | 55 | Kamm an 12 |
| 46 | erster Gehäuseteil | 56 | Wegdrücksteg |
| 47 | zweiter Gehäuseteil | 57 | Spitze von 18 |
| 48 | Dichtung | | |
| 49 | Führungssteg | | |

## Patentansprüche

1. Verpackung (1) für ein Implantat (2), insbesondere für ein Dentalimplantat, mit einem Gehäuse (5), welches einen durch einen schwenkbaren und/oder schiebbaren Deckel (4) im wesentlichen flüssigkeitsdicht abschliessbaren Aufnahmeraum (51) für einen ersten Abschnitt (2') des Implantats (2) in Form des eigentlichen, später in menschlichen Knochen und/oder Gewebe eingesetzten Teils aufweist, sowie einen durch eine Gehäusewand (8) vom Aufnahmeraum (51) abgetrennten Bereich (19) für einen zweiten Abschnitt (3) des Implantats (2) in Form einer Montagehalterung, wobei in der Gehäusewand (8) eine den Aufnahmeraum (51) und den abgetrennten Bereich (19) verbindende Durchgangsöffnung (35) für einen Übergangsabschnitt (3') zwischen dem ersten Abschnitt (2') und dem zweiten Abschnitt (3) des Implantats (2) vorhanden ist, und wobei die Gehäusewand (8) einen Entnahmeschlitz (9, 36) aufweist, welcher es erlaubt, das Implantat bei geöffneten Deckel (4) ohne Trennung der Abschnitte (2, 3) zu entnehmen,
wobei die Verpackung (1) wenigstens eine Flüssigkeitspatrone (12) sowie ein zugehöriges Auslöseelement (18) aufweist, und wobei die Flüssigkeitspatrone (12) bei geschlossenem Deckel (4) über das Auslöseelement (18) derart geöffnet werden kann, dass in der Flüssigkeitspatrone (12) befindliche Flüssigkeit in den Aufnahmeraum (51) ausfliessen kann.

2. Verpackung nach Anspruch 1, **dadurch gekennzeichnet, dass** das Gehäuse (5) länglich mit einem vorderen Ende (21) und einem hinteren Ende (22) ausgebildet ist, und dass der abgetrennte Bereich (19) am vorderen Ende (21) angeordnet ist,
die Flüssigkeitspatrone (12) am hinteren Ende angeordnet ist, und der Aufnahmeraum (51) dazwischen angeordnet ist.

3. Verpackung nach einem der vorhergehenden Ansprüche, **dadurch gekennzeichnet, dass** der abgetrennte Bereich (19) bei geschlossenem Deckel (4) frei zugänglich ist.

4. Verpackung nach einem der vorhergehenden Ansprüche, **dadurch gekennzeichnet, dass** die Verpackung (1) zur zusätzlichen Aufnahme einer Einheilkappe (28) vorgesehen ist, und dass der Deckel (4) eine Öffnung (40) zur Entnahme der Einheilkappe (28) aufweist und das Gehäuse (5) eine Gehäuseöffnung (16) zur Entnahme der Einheilkappe (28), und dass, vorzugsweise bei im Gehäuse angeordneter Einheilkappe (28), die Gehäuseöffnung (16) durch den Deckel (4) sowohl bei vollständig geschlossenem als auch bei vollständig geöffnetem Deckel (4) abgedeckt wird und nur bei einer Zwischenposition des Deckels (4) durch in Deckung bringen der Öffnung (40) mit der Gehäuseöffnung (16) freigelegt wird, oder dass, vorzugsweise bei im oder am Deckel angeordneter Einheilkappe (28), die Öffnung (40) durch das Gehäuse (5) sowohl bei vollständig geschlossenem als auch bei vollständig geöffnetem Deckel (4) abgedeckt wird und nur bei einer Zwischenposition des Deckels (4) durch in Deckung bringen der Öffnung (16) mit der Gehäuseöffnung (40) freigelegt wird.

5. Verpackung nach einem der vorhergehenden Ansprüche, **dadurch gekennzeichnet, dass** der Aufnahmeraum (51) im unteren Bereich einen Auffangbehälter (11) für die Flüssigkeit der Flüssigkeitspatrone (12) aufweist, welcher bevorzugtermassen ein Volumen aufweist, welches im wesentlichen dem Flüssigkeitsvolumen der Flüssigkeitspatrone (12) entspricht oder geringer ist, und dass dieser Aufnahmeraum (51) bei vollständig geöffneter Verpackung durch den Deckel (4) verschlossen oder wenigstens abgedeckt wird.

6. Verpackung nach einem der vorhergehenden Ansprüche, **dadurch gekennzeichnet, dass** das Gehäuse (5) einen hohlzylindersegmentförmigen Bereich (14) aufweist, welcher zusammen mit einem ebenfalls hohlzylindersegmentförmigen und koaxial zum hohlzylindersegmentförmigen Bereich (14) angeordneten Deckel (4) im wesentlichen den Aufnahmeraum (51) begrenzt, dass der abgetrennte Bereich (19) durch eine senkrecht zur Längsachse (20) des Gehäuses (5) angeordnete, bevorzugt kreisscheibenförmige oder kreissegmentförmige Gehäusewand (8) vom Aufnahmeraum (51) abgetrennt wird, wobei diese Gehäusewand (8) vorzugsweise eine im wesentlichen auf der Längsachse (20) angeordnete Durchgangsöffnung (35) aufweist, welche durch einen verjüngten Schlitz (36) nach oben offen ist, dass der Deckel (4) um die gemeinsame Längsachse (20) drehbar gelagert ist, wobei er vorzugsweise mit seiner Aussenfläche im wesentlichen bündig auf der Innenseite des Gehäuses geleitet, und von einem geschlossenen Zustand in einen offenen Zustand umgeschwenkt werden kann, und dass der Deckel (4) an seinem der Gehäusewand (8) zugewandten axialen Rand über einen vorzugsweise den gleichen Winkelbereich wie das Zylindersegment des Deckels (4) überstreichenden, senkrecht zur Längsachse (20) angeordneten Dichtungswandabschnitt (10) verfügt.

7. Verpackung nach Anspruch 6, **dadurch gekennzeichnet, dass** der hohlzylindersegmentförmige Bereich (14) des länglichen Gehäuses (5) zu einem vorderen Ende (21) über die Gehäusewand (8) wenigstens so weit wie der zweite Abschnitt (3) des Implantats (2), vorzugsweise weiter als dieser, in axialer Richtung hervor steht und dadurch der bevorzugt in axialer Richtung und nach oben offene abgetrennte Bereich (19) gebildet wird, und dass am gegenüberliegenden hinteren Ende (21) das Gehäuse (5) über einen im wesentlichen geschlossenen hohlzylinderförmigen Bereich verfügt, in welchem eine bevorzugt im wesentlichen zylindrisch ausgebildete und koaxial angeordnete und in diesen Bereich bevorzugt passgenau in axialer Richtung einschiebbare Flüssigkeitspatrone (12) angeordnet ist, wobei weiterhin vorzugsweise das Auslöseelement (18) die Freigabe der Flüssigkeit auslöst, wenn die Flüssigkeitspatrone (12) in axialer Richtung (23) in das Gehäuse bis zu einem Anschlag eingeschoben wird.

8. Verpackung nach einem der Ansprüche 6 oder 7, **dadurch gekennzeichnet, dass** der hohlzylindersegmentförmige Bereich (14) des Gehäuses (5) um die Längsachse (20) einen Winkelbereich von 120-210° umfasst, vorzugsweise im Bereich von 160-200°, und/oder dass der hohlzylindersegmentförmige Abschnitt des Deckels (4) einen Winkelbereich von 120-270°, vorzugsweise von 200-250° umfasst.

9. Verpackung nach einem der Ansprüche 6-8, **dadurch gekennzeichnet, dass** das Gehäuse (5) wenigstens an seinem vorderen Ende (21) über zwei seitliche, vorzugsweise tangential und im wesentlichen parallel zueinander oder nach unten erweiternd angeordnete, nach unten vorstehende Füsse (7) verfügt sowie vorzugsweise daran anschliessende und zum hinteren Ende (22) erstreckende Stege (15), wobei die Gehäusewand (8) derart angebunden ist, dass ein gegeneinander pressen (39) der beiden Füsse (7) eine die Entnahme des Implantats (2) erleichternde Erweiterung des verjüngten Schlitzes (36) bewirkt.

10. Verpackung nach einem der vorhergehenden Ansprüche, **dadurch gekennzeichnet, dass** das Gehäuse (5) im wesentlichen als länglicher, nach oben offener Kasten ausgebildet ist, dass an einem vorderen Ende (21) der abgetrennte Bereich (19) angeordnet ist und an einem gegenüberliegenden hinteren Ende (22) die Flüssigkeitspatrone (28), vorzugsweise in zylindrischer Form mit ihrer Achse senkrecht zur Längsrichtung des Gehäuses und aus diesem wenigstens teilweise nach oben herausragend, angeordnet ist, dass der Deckel (4) diese obere Öffnung verschliesst und entlang der Längsrichtung des Gehäuses zum hinteren Ende (22) die obere Öffnung freigebend verschoben werden kann, wobei vorzugsweise diese öffnende Verschiebung des Deckels (4) nur möglich ist, wenn entweder die Flüssigkeitspatrone (28) vom Gehäuse entfernt worden ist oder unter Freigabe der Flüssigkeit in das Gehäuse hinein gepresst worden ist.

11. Verpackung nach Anspruch 10, **dadurch gekennzeichnet, dass** die Gehäusewand (8) durch einen ersten Gehäuseteil (46) und einen zweiten Gehäuseteil (47) gebildet wird, dass der Schlitz (9) respektive der erweiterte Bereich (35) und der verjüngte oder sogar geschlossene Bereich (36) auf der einen Seite vom ersten und auf der anderen Seite vom zweiten Gehäuseteil begrenzt wird, und dass der erste Gehäuseteil (46) relativ zum zweiten Gehäuseteil (47) im wesentlichen in einer Richtung senkrecht zur Längsachse (20) des Gehäuses unter Erweiterung respektive Öffnung des Bereichs (36) verschoben werden kann.

12. Verpackung nach Anspruch 11, **dadurch gekennzeichnet, dass** sowohl der erste Gehäuseteil (46) als auch der zweite Gehäuseteil (47) wenigstens einen auf der gleichen Seite des Gehäuses angeordneten seitlichen Wandabschnitt bilden, dass diese beiden Wandabschnitte um einen Spalt (50) beabstandete sind und dass der Deckel an seinem dem vorderen Ende (21) zugewandten Ende über einen Führungssteg (49) verfügt, welcher wenigstens teilweise in diesen Spalt (50) eingreift.

13. Verpackung nach einem der vorhergehenden Ansprüche, **dadurch gekennzeichnet, dass** der Deckel (4) und/oder wenigstens Bereiche des Gehäuses (5) transparent oder transluzent sind, so dass ein in der Verpackung angeordnetes Implantat (2) und/oder eine in oder an der Verpackung angeordnete Einheilkappe (28) erkannt werden kann.

14. Verpackung nach einem der vorhergehenden Ansprüche mit einem darin angeordneten Dentalimplantat (2), wobei vorzugsweise in der Flüssigkeitspatrone (28) eine Flüssigkeit angeordnet ist, mit welcher die Oberfläche des Dentalimplantates (2) kurz vor dessen einsetzen in den menschlichen Körper benetzt und/oder gespült wird, wobei es sich vorzugsweise bei dieser Flüssigkeit um eine wässrige Lösung einer wenigstens eine der folgenden Wirkungen zeigenden Komponente handelt: Förderung der Einheilung, Verhinderung der Entzündungsbildung oder von Infektionen, Förderung des Knochenwachstums, Förderung des Gewebewachstums, Verhinderung des Knochenabbaus, Stabilisierung oder Verbesserung der Knochendichte in der Implantatumgebung, Verbesserung des Knochen-Implantat Kontaktes durch Erhöhung der am Implantat angewachsenen Menge Knochen oder Weichgewebe.

15. Verfahren zur Benetzung und anschliessenden Entnahme eines Dentalimplantats (2) aus einer Verpackung nach einem der vorhergehenden Ansprüche, **dadurch gekennzeichnet, dass** die Flüssigkeitspatrone (28) unter Freigabe der darin befindlichen Flüssigkeit in den Aufnahmeraum (51) in die Verpackung eingepresst wird, dass die Verpackung mit dem darin befindlichen Dentalimplantat (2) unter Benetzung desselben bewegt respektive geschüttelt wird, dass die Verpackung durch Verschieben oder Verschwenken des Deckels (4) geöffnet und das Dentalimplantat (2), an der Montagehalterung (3) ergriffen, aus der Verpackung entnommen wird, und dass optional in einem wenigstens mittelbar an folgenden Schritt der Deckel (4) wieder teilweise verschlossen wird so dass eine Einheilkappe (28) freigelegt wird, und die Einheilkappe (28) aus der Verpackung entnommen wird.

## Claims

1. A package (1) for an implant (2), in particular for a dental implant, with a housing (5), which has a compartment (51) for a first portion (2') of the implant (2) in the form of the part to be implanted into the human bone and/or tissue that can be closed by a pivotable and/or slidable cover (4) so as to be substantially liquid-tight and a region (19) for a second portion (3) of the implant (2) in the form of a mounting holder that is separated from the compartment (51) by a housing wall (8), wherein a passage (35) connecting the compartment (51) and the separated region (19) is present in the housing wall (8) for a transitional portion (3') between the first portion (2') and the second portion (3) of the implant (2), and wherein the housing wall (8) has a removal slot (9, 36), which allows the implant to be removed when the cover (4) is open, without separating the portions (2, 3), wherein the package (1) has at least one liquid cartridge (12) and an associated release element (18), and wherein, with the cover (4) closed, the liquid cartridge (12) can be opened by means of the release element (18) in such a way that liquid located in the liquid cartridge (12) can flow out into the compartment (51).

2. The package as claimed in claim 1, **characterized in that** the housing (5) is formed in an elongated manner with a front end (21) and a rear end (22), and **in that** the separated region (19) is arranged at the front end (21), the liquid cartridge (12) is arranged at the rear end, and the compartment (51) is arranged in between.

3. The package as claimed in one of the preceding claims, **characterized in that**, with the cover (4) closed, the separated region (19) is freely accessible.

4. The package as claimed in one of the preceding claims, **characterized in that** the package (1) is intended for additionally receiving a healing cap (28), and **in that** the cover (4) has an opening (40) for the removal of the healing cap (28) and the housing (5) has a housing opening (16) for the removal of the healing cap (28), and **in that**, preferably with the healing cap (28) arranged in the housing, the housing opening (16) is covered by the cover (4) both when the cover (4) is completely closed and when the cover (4) is completely open and is only exposed in the case of an intermediate position of the cover (4), by bringing the opening (40) into line with the housing opening (16), or **in that**, preferably with the healing cap (28) arranged in or on the cover, the opening (40) is covered by the housing (5) both when the cover (4) is completely closed and when the cover (4) is completely open and is only exposed in the case of an intermediate position of the cover (4) by bringing the opening (16) into line with the housing opening (40).

5. The package as claimed in one of the preceding claims, **characterized in that** the compartment (51) has in the lower region a collecting container (11) for the liquid of the liquid cartridge (12), which container preferably has a volume which corresponds substantially to the liquid volume of the liquid cartridge (12) or is smaller, and **in that** this compartment (51) is closed or at least covered by the cover (4) when the package is completely open.

6. The package as claimed in one of the preceding claims, **characterized in that** the housing (5) has a region (14) in the form of a segment of a hollow cylinder, which together with a cover (4) that is likewise in the form of a segment of a hollow cylinder and arranged coaxially in relation to the region (14) in the form of a segment of a hollow cylinder substantially delimits the compartment (51), **in that** the separated region (19) is separated from the compartment (51) by a housing wall (8) arranged perpendicularly in relation to the long axis (20) of the housing (5) and preferably in the form of a circular disk or in the form of a segment of a circle, wherein this housing wall (8) preferably has a passage (35) that is arranged substantially on the long axis (20) and is upwardly open by means of a narrowed slot (36), **in that** the cover (4) is mounted rotatably about the common axis (20), wherein it slides substantially flush on the inner side of the housing, preferably with its outer surface, and can be pivoted from a closed state into an open state, and **in that** the cover (4) has on its axial periphery, facing the housing wall (8), a sealing wall portion (10) preferably passing over the same angular range as the cylinder segment of the cover (4) and arranged perpendicularly in relation to the long axis (20).

7. The package as claimed in claim 6, **characterized in that** the region (14) of the elongated housing (5) in the form of a segment of a hollow cylinder protrudes in the axial direction toward a front end (21) beyond the housing wall (8), at least as far as the second portion (3) of the implant (2), preferably somewhat further than the latter, and as a result the separated region (19) that is preferably open in the axial and upward directions is formed, and **in that**, at the opposite rear end (21), the housing (5) has a substantially closed region in the form of a hollow cylinder in which there is arranged a liquid cartridge (12), which is preferably of a substantially cylindrical form and coaxially arranged and can be pushed in the axial direction into this region, preferably with an exact fit, wherein, furthermore, the release element (18) preferably initiates the release of the liquid when the liquid cartridge (12) is pushed into the housing in the axial direction (23) as far as a stop.

8. The package as claimed in either of claims 6 and 7, **characterized in that** the region (14) of the housing (5) in the form of a segment of a hollow cylinder covers an angular range around the long axis (20) of 120-210°, preferably in the range of 160-200°, and/or **in that** the portion of the cover (4) in the form of a segment of a hollow cylinder covers an angular range of 120-270°, preferably of 200-250°.

9. The package as claimed in one of claims 6-8, **characterized in that** the housing (5) has, at least at its front end (21), two lateral, downwardly protruding feet (7), preferably arranged tangentially and substantially parallel to each other or widening downwardly, and preferably webs (15) adjoining thereto and extending toward the rear end (22), wherein the housing wall (8) is joined on in such a way that pressing together (39) of the two feet (7) brings about a widening of the narrowed slot (36) that facilitates the removal of the implant (2).

10. The package as claimed in one of the preceding claims, **characterized in that** the housing (5) is substantially formed as an elongated, upwardly open box, **in that** the separated region (19) is arranged at a front end (21) and the liquid cartridge (28) is arranged at an opposite rear end (22), the liquid cartridge preferably being of a cylindrical form with its axis perpendicular to the longitudinal direction of the housing and arranged such that it protrudes at least partially upward out of the latter, **in that** the cover (4) closes this upper opening and can be displaced along the longitudinal direction of the housing toward the rear end (22), exposing the upper opening, wherein this opening displacement of the cover (4) is preferably only possible if the liquid cartridge (28) has either been removed from the housing or has been pressed into the housing, thereby releasing the liquid.

11. The package as claimed in claim 10, **characterized in that** the housing wall (8) is formed by a first housing part (46) and a second housing part (47), **in that** the slot (9) or the widened region (35) and the narrowed or even closed region (36) are delimited on one side by the first housing part and on the other side by the second housing part, and **in that** the first housing part (46) can be displaced in relation to the second housing part (47) substantially in a direction perpendicular to the longitudinal axis (20) of the housing, thereby widening or opening the region (36).

12. The package as claimed in claim 11, **characterized in that** both the first housing part (46) and the second housing part (47) form at least one lateral wall portion arranged on the same side of the housing, **in that** these two wall portions are spaced apart by a gap (50) and **in that** the cover has at its end facing the front end (21) a guiding web (49), which engages at least partially in this gap (50).

13. The package as claimed in one of the preceding claims, **characterized in that** the cover (4) and/or at least regions of the housing (5) are transparent or translucent, so that an implant (2) arranged in the package and/or a healing cap (28) arranged in or on the package can be identified.

14. The package as claimed in one of the preceding claims with a dental implant (2) arranged in it, wherein a liquid with which the surface of the dental implant (2) is wetted and/or rinsed shortly before its insertion into the human body is preferably arranged in the liquid cartridge (28), wherein this liquid is preferably an aqueous solution of a component exhibiting at least one of the following effects: promoting healing, preventing inflammation or infections, promoting bone growth, promoting tissue growth, preventing bone degradation, stabilizing or improving the bone density in the surroundings of the implant, improving the bone-implant contact by increasing the amount of bone or soft tissue growing on the implant.

15. A method for wetting and subsequently removing a dental implant (2) from a package as claimed in one of the preceding claims, **characterized in that** the liquid cartridge (28) is pressed into the package, with the liquid located therein being released into the compartment (51), **in that** the package with the dental implant (2) located therein is moved or shaken, wetting the same, **in that** the package is opened by displacing or pivoting the cover (4) and the dental implant (2), taken up by the mounting holder (3), is removed from the package, and **in that** optionally, in an at least indirectly following step, the cover (4) is partially closed again, so that the healing cap (28) is exposed, and the healing cap (28) is removed from the package.

## Revendications

1. Emballage (1) pour implant (2), en particulier un implant dentaire, l'emballage présentant
un boîtier (5) qui présente un espace (51) recevant une première partie (2') de l'implant (2) qui présente la forme de la pièce proprement dite insérée ultérieurement dans l'os et/ou le tissu humain, l'espace de réception pouvant être fermé de manière essentiellement étanche aux liquides par un couvercle (4) pivotant et/ou coulissant,
ainsi qu'une zone (19) pour une deuxième partie (3) de l'implant (2), qui présente la forme d'un support de montage, la zone étant séparée de l'espace de réception (51) par une paroi de boîtier (8), une ouverture (35) permettant le passage d'une partie (3') qui forme la transition entre la première partie (2') et la deuxième partie (3) de l'implant (2) reliant l'espace de réception (51) et la zone (19) qui en est séparée dans la paroi de boîtier (8),
la paroi de boîtier (8) présentant une fente de prélèvement (9, 36) qui permet de prélever l'implant sans séparer les parties (2, 3) lorsque le couvercle (4) est ouvert,
l'emballage (1) présentant au moins une cartouche (12) à liquide à laquelle est associé un élément de déclenchement (18),
la cartouche (12) à liquide pouvant être ouverte par l'intermédiaire de l'élément de déclenchement (18) lorsque le couvercle (4) est fermé, de telle sorte que le liquide présent dans la cartouche (12) à liquide puisse s'écouler dans l'espace de réception (51).

2. Emballage selon la revendication 1, **caractérisé en ce que** le boîtier (5) a une configuration allongée qui présente une extrémité avant (21) et une extrémité arrière (22) et **en ce que** la zone (19) séparée est disposée à l'extrémité avant (21), **en ce que** la cartouche (12) à liquide est disposée à l'extrémité arrière et **en ce que** l'espace de réception (51) est situé entre ces extrémités.

3. Emballage selon l'une des revendications précédentes, **caractérisé en ce que** la zone (19) séparée est accessible librement lorsque le couvercle (4) est fermé.

4. Emballage selon l'une des revendications précédentes, **caractérisé en ce que** l'emballage (1) est prévu pour reprendre en supplément un capuchon de scellement (28), **en ce que** le couvercle (4) présente une ouverture (40) permettant d'enlever le capuchon de scellement (28), **en ce que** le boîtier (5) présente une ouverture (16) qui permet d'enlever le capuchon de scellement (28), **en ce que** de préférence lorsque le capuchon de scellement (28) est disposé dans le boîtier, l'ouverture (16) du boîtier est recouverte par le couvercle (4) aussi bien lorsque le couvercle (4) est complètement fermé que lorsqu'il est complètement ouvert et n'est libérée que lorsque le couvercle (4) est dans une position intermédiaire dans laquelle l'ouverture (40) est alignée sur l'ouverture (16) du boîtier ou **en ce que**, de préférence lorsque le capuchon de scellement (28) est disposé dans le couvercle ou sur le couvercle, l'ouverture (40) est recouverte par le boîtier (5) aussi bien lorsque le couvercle (4) est complètement fermé que lorsqu'il est complètement ouvert et n'est libérée lorsque le couvercle (4) est dans une position intermédiaire dans laquelle l'ouverture (16) est alignée sur l'ouverture (40) du boîtier.

5. Emballage selon l'une des revendications précédentes, **caractérisé en ce que** l'espace de réception (51) présente dans sa partie inférieure un récipient (11) qui reprend le liquide de la cartouche (12) à liquide, le récipient de reprise présentant de préférence un volume qui correspond essentiellement au volume du liquide de la cartouche (12) à liquide ou plus petit que ce dernier, et **en ce que** cet espace de réception (51) est fermé ou au moins recouvert par le couvercle (4) lorsque l'emballage est complètement ouvert.

6. Emballage selon l'une des revendications précédentes, **caractérisé en ce que** le boîtier (5) présente une zone (14) en forme de segment de cylindre creux qui délimite essentiellement l'espace de réception (51) avec un couvercle (4), également en forme de segment de cylindre creux, disposé coaxialement par rapport à la zone (14) en forme de segment de cylindre creux, **en ce que** la zone (19) séparée est séparée de l'espace de réception (51) par une paroi de boîtier (8) disposée perpendiculairement à l'axe longitudinal (20) du boîtier (5), de préférence en forme de plaque circulaire ou de segment de cercle, **en ce que** cette paroi de boîtier (8) présente de préférence une ouverture de passage (35) disposée essentiellement sur l'axe longitudinal (20) et ouverte dans le haut par une fente rétrécie (36), **en ce que** le couvercle (4) est monté de manière à pouvoir tourner autour de l'axe longitudinal commun (20), **en ce qu'**il est guidé essentiellement à chant sur le côté intérieur du boîtier, de préférence par sa surface extérieure, **en ce qu'**il peut pivoter depuis une position fermée jusque dans une position ouverte et **en ce que** sur son bord axial tourné vers la paroi de boîtier (8), le couvercle (4) présente une partie (10) de paroi d'étanchéité disposée perpendiculairement à l'axe longitudinal (20) et s'étendant de préférence sur la même plage angulaire que le segment de cylindre du couvercle (4).

7. Emballage selon la revendication 6, **caractérisé en ce que** la zone (14) en forme de segment de cylindre creux du boîtier allongé (5) déborde au-delà de la partie de boîtier (8) en direction d'une extrémité avant (21), de préférence sur une distance axiale qui correspond à la deuxième partie (3) de l'implant (2) et de préférence plus grande que cette dernière, ce qui forme la zone (19) séparée, ouverte vers le haut dans la direction axiale, **en ce que** sur l'extrémité arrière opposée (21), le boîtier (5) présente une zone en forme de cylindre creux essentiellement fermé dans laquelle est disposée une cartouche (12) à liquide de préférence de forme essentiellement cylindrique, disposée coaxialement et apte à être insérée axialement dans cette zone, de manière de préférence ajustée, l'élément de déclenchement (18) déclenchant la libération du liquide de préférence lorsque la cartouche (12) à liquide est insérée en direction axiale (23) dans le boîtier jusqu'à une butée.

8. Emballage selon l'une des revendications 6 ou 7, **caractérisé en ce que** la zone (14) en forme de segment de cylindre creux du boîtier (5) s'étend sur une plage angulaire de 120 à 210° et de préférence de l'ordre de 160 à 200° autour de l'axe longitudinal (20) et/ou **en ce que** la partie en forme de segment de cylindre creux du couvercle (4) s'tend sur une plage angulaire de 120 à 270° et de préférence de 200 à 250°.

9. Emballage selon l'une des revendications 6 à 8, **caractérisé en ce que** le boîtier (5) présente au moins sur son extrémité avant (21) deux pieds latéraux (7) débordant vers le bas, disposés de préférence tangentiellement et essentiellement parallèlement l'un à l'autre ou en s'évasant vers le bas, ainsi que des nervures (15) qui de préférence s'y raccordent et s'étendent jusqu'à l'extrémité arrière (22), la paroi de boîtier (8) étant reliée de telle sorte que lorsque les deux pieds (7) sont repoussés l'un vers l'autre (39), ils permettent d'obtenir un évasement de la fente rétrécie (36), ce qui facilite le prélèvement de l'implant (2).

10. Emballage selon l'une des revendications précédentes, **caractérisé en ce que** le boîtier (5) est configuré essentiellement comme boîte allongée ouverte dans le haut, **en ce que** la zone (19) séparée est disposée à une extrémité avant (21) et **en ce que** la cartouche (28) à liquide, de préférence de forme cylindrique et dont l'axe s'étend perpendiculairement au sens de la longueur du boîtier et déborde de ce dernier au moins en partie vers le haut, est disposée à une extrémité arrière opposée (22), **en ce que** le couvercle (4) ferme cette ouverture supérieure et peut être déplacé dans le sens de la longueur du boîtier en direction de l'extrémité arrière (22) pour libérer l'ouverture supérieure, **en ce que** ce déplacement d'ouverture du couvercle (4) est possible de préférence uniquement si la cartouche (28) à liquide a été enlevée du boîtier ou a été comprimée pour libérer le liquide dans le boîtier.

11. Emballage selon la revendication 10, **caractérisé en ce que** la paroi de boîtier (8) est formée par une première partie de boîtier (46) et une deuxième partie de boîtier (47), **en ce que** la fente (9) ou la zone évasée (35) et la zone rétrécie et même fermée (36) sont délimitées sur un côté par la première partie de boîtier et sur l'autre côté par la deuxième partie de boîtier et **en ce que** la première partie de boîtier (46) peut être déplacée par rapport à la deuxième partie de boîtier (47) essentiellement dans une direction perpendiculaire à l'axe longitudinal (20) du boîtier en agrandissant ou en ouvrant la zone (36).

12. Emballage selon la revendication 11, **caractérisé en ce que** tant la première partie de boîtier (46) que la deuxième partie de boîtier (47) forment au moins une partie latérale de paroi disposée sur le long côté du boîtier, **en ce que** ces deux parties de paroi sont séparées l'une de l'autre par un interstice (50) et **en ce que** le couvercle présente sur son extrémité tournée vers l'extrémité avant (21) une nervure de guidage (49) qui s'engage au moins en partie dans cet interstice (50).

13. Emballage selon l'une des revendications précédentes, **caractérisé en ce que** le couvercle (4) et/ou au moins des zones du boîtier (5) sont transparents ou translucides de telle sorte que la présence d'un implant (2) disposé dans l'emballage et/ou d'un capuchon de scellement (28) disposé sur l'emballage puissent être détectés.

14. Emballage selon l'une des revendications précédentes, dans lequel est disposé un implant dentaire (2), un liquide par lequel la surface de l'implant dentaire (2) peut être mouillée et/ou recouverte peu avant son insertion dans le corps humain étant de préférence repris dans la cartouche (28) à liquide, ce liquide étant de préférence une solution aqueuse d'un composant qui exerce au moins l'un des effets suivants : promotion de la cicatrisation, inhibition de la formation d'inflammations ou d'infections, promotion de la croissance osseuse, promotion de la croissance de tissus, inhibition de la décomposition osseuse, stabilisation ou amélioration de la densité osseuse dans l'environnement de l'implant, amélioration du contact os-implant en renforçant la quantité d'os ou de tissu mou en croissance sur l'implant.

15. Procédé de mouillage et ensuite de prélèvement d'un implant dentaire (2) dans un emballage selon l'une des revendications précédentes, **caractérisé en ce que** la cartouche (28) à liquide est comprimée dans l'emballage en libérant dans l'espace de réception (51) le liquide qu'elle contient, **en ce que** l'emballage et l'implant dentaire (2) qu'il contient sont déplacés ou secoués pour mouiller ce dernier, **en ce que** l'emballage est ouvert en déplaçant ou en faisant pivoter le couvercle (4), **en ce que** l'implant dentaire (2) saisi par le support de montage (3) est prélevé dans l'emballage et **en ce que** facultativement, dans une étape suivant au moins indirectement, le couvercle (4) est de nouveau fermé en partie de manière à libérer un capuchon de scellement (28) et **en ce que** le capuchon de scellement (28) est enlevé de l'emballage.
